# EUROPÄISCHE PATENTSCHRIFT

(11) **EP 0 581 732 B1**
(45) Veröffentlichungstag und Bekanntmachung des Hinweises auf die Patenterteilung: **03.05.2000**
(21) Anmeldenummer: 93810506.1
(22) Anmeldetag: 14.07.1993
(51) Int. Cl.: C09B 62/44, C09B 62/447, C09B 62/026, C09B 67/00

(54) **Farbstoffmischungen, Verfahren zu deren Herstellung und deren Verwendung**
Mixtures of dyes, process for their manufacture and their use
Mélanges de colorants, procédé pour leur préparation et leur utilisation

(30) Priorität: 23.07.1992 CH 235092
(43) Veröffentlichungstag der Anmeldung: 02.02.1994
(73) Patentinhaber: Ciba Specialty Chemicals Holding Inc., 4057 Basel (CH)
(72) Erfinder: Tzikas, Athanassios, Dr., CH-4133 Pratteln (CH); Carisch, Claudia, CH-4153 Reinach (CH)

(56) Entgegenhaltungen:
- FR-A- 2 291 257

## Beschreibung

Die vorliegende Erfindung betrifft neue Mischungen von Reaktivfarbstoffen, Verfahren zu deren Herstellung und deren Verwendung zum Färben oder Bedrucken von Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere in bezug auf die Applikation, aufweisen.

Für das Färben werden heute Reaktivfarbstoffe gefordert, die eine ausreichende Substantivität haben und die zugleich eine gute Auswaschbarkeit der nicht fixierten Anteile aufweisen. Sie sollen ferner eine gute färberische Ausbeute aufweisen und hohe Reaktivität besitzen, wobei insbesondere Färbungen mit hohen Fixiergraden geliefert werden sollen. Von den bekannten Farbstoffen werden diese Anforderungen nicht in allen Eigenschaften erfüllt.

Der vorliegenden Erfindung liegt daher die Aufgabe zugrunde, neue, verbesserte Reaktivfarbstoffe bzw. Mischungen von Reaktivfarbstoffen für das Färben und Bedrucken von Fasermaterialien zu finden, welche die oben charakterisierten Qualitäten in hohem Masse besitzen. Die neuen Farbstoffe bzw. Farbstoffmischungen sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht-und Nassechtheiten, ergeben.

Es hat sich gezeigt, dass mit den weiter unten definierten neuen Mischungen von reaktiven Farbstoffen die gestellte Aufgabe weitgehend gelöst wird.

Gegenstand der Erfindung sind daher Farbstoffmischungen, welche dadurch gekennzeichnet sind, dass sie einen Reaktivfarbstoff der Formel 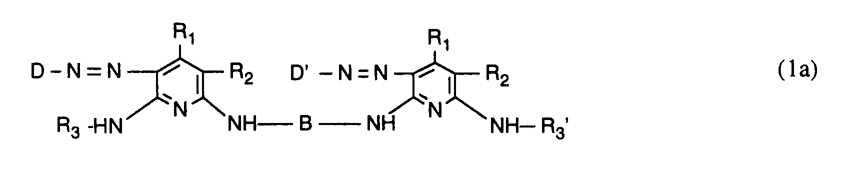 zusammen mit mindestens einem Reaktivfarbstoff der Formeln 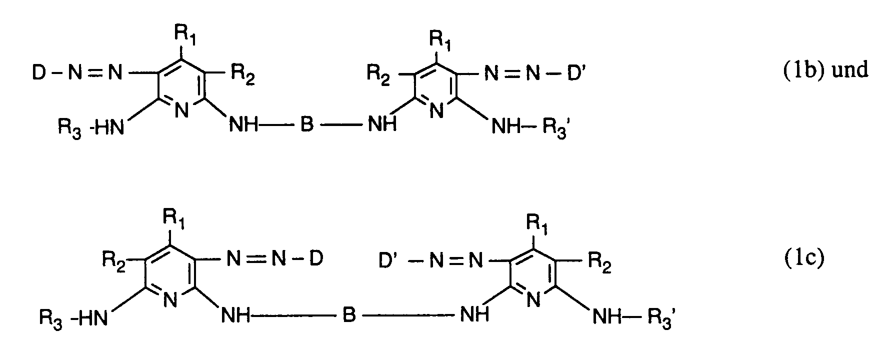
enthalten, wobei D und D' unabhängig voneinander der Rest einer Diazokomponente der Benzol- oder Naphthalinreihe oder der Rest eines Mono- oder Disazofarbstoffes sind,
R₁ C₁-C₄-Alkyl,
R₂ Cyano, Carbamoyl oder Sulfomethyl ist,
R₃ und R₃' unabhängig voneinander Wasserstoff oder gegebenenfalls substituiertes und mit Ausnahme von Methyl gegebenenfalls durch Sauerstoff unterbrochenes C₁-C₁₂-Alkyl bedeuten,
B gegebenenfalls substituiertes und gegebenenfalls durch Sauerstoff unterbrochenes C₂-C₁₂-Alkylen ist
und die Reaktivfarbstoffe der Formeln (1a), (1b) und (1c) jeweils mindestens einen faserreaktiven Rest der Formel

   -SO₂-Z (2a),

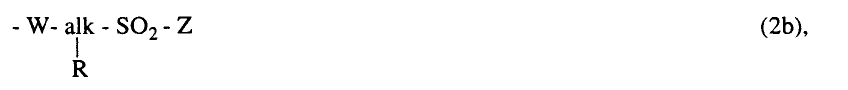

   -W-alk-E-alk'-SO₂-Z (2c),

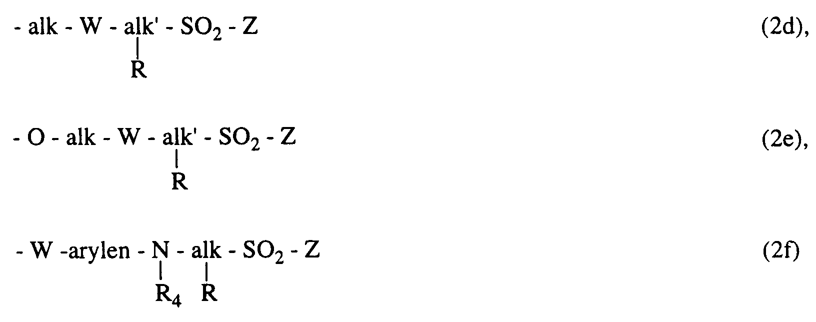

   oder

   -NH-CO-Z₁ (2g),
worin W eine Gruppe der Formel -SO₂-NR₄-, -CONR₄- oder -NR₄CO- ist, R₄ Wasserstoff, unsubstituiertes oder durch Hydroxy, Sulfo, Sulfato, Carboxy oder Cyano substituiertes C₁-C₄-Alkyl oder ein Rest der Formel 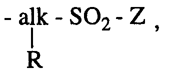 R Wasserstoff, Hydroxy, Sulfo, Sulfato, Carboxy, Cyano, Halogen, C₁-C₄-Alkoxycarbonyl, C₁-C₄-Alkanoyloxy, Carbamoyl oder die Gruppe -SO₂-Z ist, Z eine Gruppe der Formel -CH=CH₂ oder -CH₂-CH₂-U₁ und U₁ eine Abgangsgruppe ist, Z₁ eine Gruppe der Formel 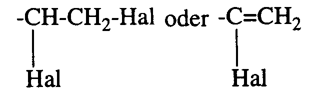 und Hal Halogen bedeutet, E der Rest -O- oder -NR₅- und
R₅ Wasserstoff oder C₁-C₄-AIkyl ist, alk und alk' unabhängig voneinander C₁-C₆-Alkylen bedeuten und arylen einen unsubstituierten oder durch Sulfo, Carboxy, C₁-C₄-Alkyl, C₁-C₄-Alkoxy oder Halogen substituierten Phenylen- oder Naphthylenrest bedeutet, oder einen faserreaktiven Rest der Formel 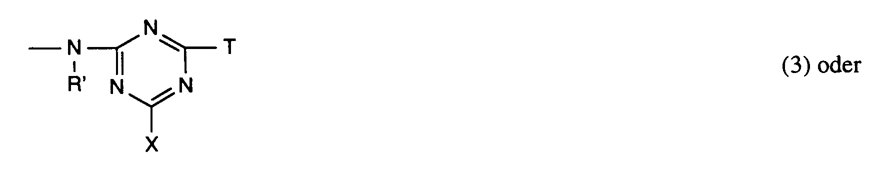 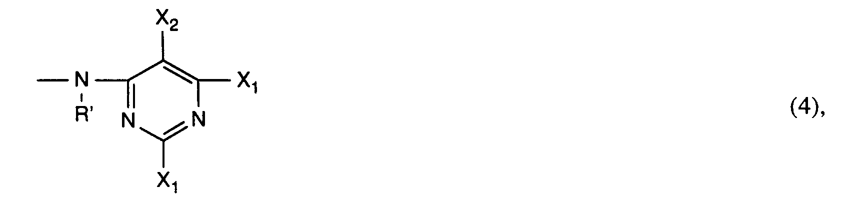
worin R' Wasserstoff oder gegebenenfalls durch Hydroxy, Sulfo, Sulfato, Carboxy oder Cyano substituiertes C₁-C₄-Alkyl ist, X, X₁ und X₂ Halogen bedeuten und T Halogen, Hydroxy, Sulfo, C₁-C₄-Alkoxy, C₁-C₄-Alkylthio, C₁-C₄-Alkylsulfonyl, Phenylsulfonyl, Morpholino oder gegebenenfalls substituiertes Amino ist, oder T ein faserreaktiver Rest der Formel 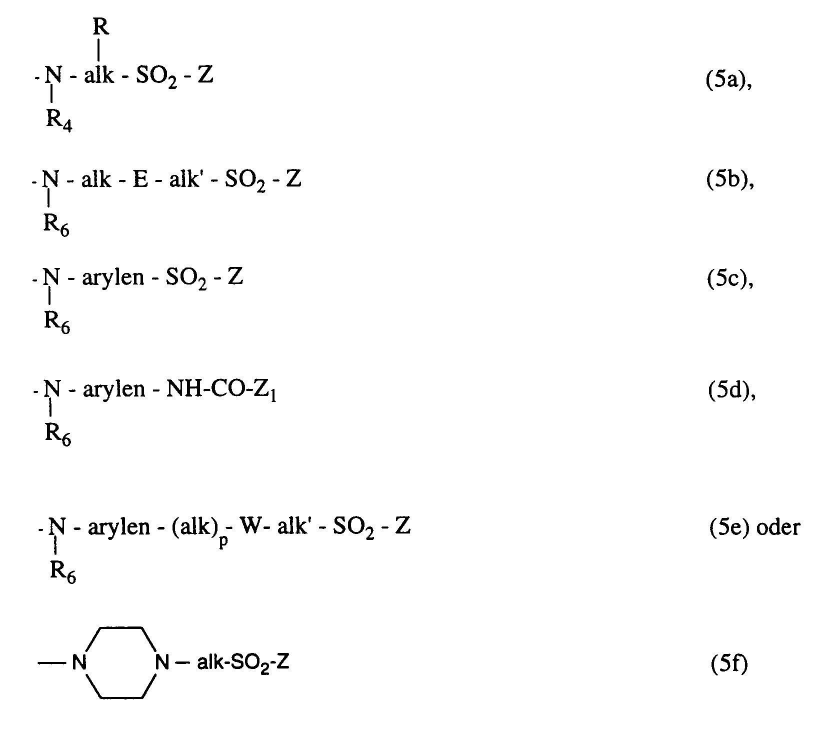
ist, wobei R, R₄, E, W, Z, Z₁, alk, alk' und arylen die oben angegebenen Bedeutungen haben, R₆ Wasserstoff oder C₁-C₄-Alkyl und p 0 oder 1 ist, enthalten, wobei der faserreaktive Rest am Rest D oder D' gebunden ist.

Aus der FR-A-2 291 257 sind Farbstoffmischungen bekannt, die sich vom Gegenstand der vorliegenden Erfindung dadurch unterscheiden, dass die zugrundeliegenden Farbstoffe keinen faserreaktiven Rest enthalten.

Als Beispiele für Substituenten im Rest D und D' seien genannt: Alkylgruppen mit 1 bis 12 Kohlenstoffatomen, insbesondere 1 bis 4 Kohlenstoffatomen, wie Methyl, Aethyl, Propyl, Isopropyl oder Butyl, durch C₁-C₄-Alkoxy oder Hydroxy weitersubstituiertes Alkyl, Alkoxygruppen mit 1 bis 8 Kohlenstoffatomen, insbesondere 1 bis 4 Kohlenstoffatomen, wie Methoxy, Aethoxy, Propoxy, Isopropoxy oder Butoxy, Alkanoylaminogruppen mit 2 bis 8 Kohlenstoffatomen, insbesondere 2 bis 4 Kohlenstoffatomen, wie Acetylamino oder Propionylamino, Phenyl- oder Naphthylamino, Alkoxycarbonylaminogruppen mit 2 bis 8 Kohlenstoffatomen, insbesondere 2 bis 4 Kohlenstoffatomen, Alkanoylgruppen mit 2 bis 8 Kohlenstoffatomen, insbesondere 2 bis 4 Kohlenstoffatomen, Alkoxycarbonyl mit 1 bis 4 Kohlenstoffatomen im Alkoxyrest, wie Methoxycarbonyl oder Aethoxycarbonyl, Alkylsulfonyl mit 1 bis 4 Kohlenstoffatomen, wie Methylsulfonyl oder Aethylsulfonyl, Phenyl- oder Naphthylsulfonyl, Alkoxycarbonyl mit 1 bis 4 Kohlenstoffatomen im Alkoxyrest, wie Methoxycarbonyl oder Aethoxycarbonyl, Benzoyl, gegebenenfalls am Stickstoff durch C₁-C₄-Alkyl substituiertes Benzoylamino, Phenyl, Naphthyl, Amino, durch C₁-C₁₂-Alkyl, Phenyl oder Naphthyl mono- oder disubstituiertes Amino, Trifluormethyl, Nitro, Cyano, Hydroxyl, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Aethylcarbamoyl, Sulfamoyl, N-Alkylsulfamoyl mit 1 bis 4 Kohlenstoffatomen, wie N-Methylsulfamoyl, N-Aethylsulfamoyl, N-Propylsulfamoyl, N-Isopropylsulfamoyl oder N-Butylsulfamoyl, N-(β-Hydroxyäthyl)-sulfamoyl, N,N-Di-(β-hydroxyäthyl)-sulfamoyl, N-Phenylsulfamoyl, Ureido, Carboxy, Sulfomethyl, Sulfo oder Sulfato sowie die genannten faserreaktiven Reste, wobei die einen Alkyl-, Phenyl- oder Naphthylrest enthaltenden Substituenten im Alkyl-, Phenyl- oder Naphthylrest weitersubstituiert sein können, wie z.B. durch die oben für D und D' genannten Substituenten. Die Alkylreste können zudem durch Sauerstoff (-O-) unterbrochen sein.

Die genannten faserreaktiven Reste sind solche, die mit den Hydroxygruppen der Cellulose, den Amino-, Carboxy-, Hydroxy- und Thiolgruppen bei Wolle und Seide, oder mit den Amino- und eventuell Carboxygruppen von synthetischen Polyamiden unter Bildung kovalenter chemischer Bindungen zu reagieren vermögen.

Die Reaktivfarbstoffe der Formeln (1a), (1b) und (1c) enthalten vorzugsweise mindestens zwei faserreaktive Reste, insbesondere zwei oder vier faserreaktive Reste.

Geeignete Abgangsgruppen U₁ sind z.B. -Cl, -Br, -F, -OSO₃H, -SSO₃H, -OCO-CH₃, -OPO₃H₂, -OCO-CCl₃, -OCO-CHCl₂, -OCO-CH₂Cl, -OSO₂-C₁-C₄-Alkyl, -OSO₂-N(C₁-C₄-Alkyl)₂ oder -OCO-C₆H₅.

Bevorzugt ist U₁ eine Gruppe der Formel -Cl, -OSO₃H, -SSO₃H, -OCO-CH₃, -OCO-C₆H₅ oder -OPO₃H₂, insbesondere -Cl oder -OSO₃H, vorzugsweise -OSO₃H.

Bei alk und alk' handelt es sich unabhängig voneinander z.B. um einen Methylen-, Äthylen-, 1,3-Propylen-, 1,4-Butylen-, 1,5-Pentylen- oder 1,6-Hexylenrest oder deren verzweigte Isomere.

Bevorzugt stehen alk und alk' für einen C₁-C₄-Alkylenrest und insbesondere bevorzugt für einen Äthylenrest.

Arylen ist vorzugsweise ein 1,3- oder 1,4-Phenylenrest, der unsubstituiert oder z.B. durch Sulfo, Methyl, Methoxy oder Carboxy substituiert ist.

R bedeutet bevorzugt Wasserstoff.

R₄ ist vorzugsweise Wasserstoff oder C₁-C₄-Alkyl, wie Methyl, Aethyl, Propyl, Isopropyl, Butyl, Isobutyl, sek.-Butyl oder tert.-Butyl. Besonders bevorzugt ist R₄ Wasserstoff.

R₆ bedeutet bevorzugt Wasserstoff, Methyl oder Aethyl, insbesondere Wasserstoff.

E steht vorzugsweise für -NH- oder -O- und insbesondere bevorzugt für -O-.

W bedeutet bevorzugt eine Gruppe der Formel -CONH- oder -NHCO-, insbesondere eine Gruppe der Formel -CONH-.

Hal im Rest Z₁ ist vorzugsweise Chlor oder insbesondere Brom.

Bevorzugt als Reaktivreste der Formeln (2a) bis (2g) sind solche, worin W eine Gruppe der Formel -CONH- oder -NHCO-, R und R₄ Wasserstoff, E der Rest -O- oder -NH-, Hal Chlor oder Brom und U₁ eine Gruppe der Formel -Cl, -OSO₃H, -SSO₃H, -OCO-CH₃, -OCO-C₆H₅ oder -OPO₃H₂, insbesondere eine Gruppe der Formel -Cl oder -OSO₃H, ist.

R' ist vorzugsweise Wasserstoff oder unsubstituiertes oder durch Hydroxyl, Sulfo oder Sulfato substituiertes C₁-C₄-Alkyl.

Bevorzugt ist R' Wasserstoff oder C₁-C₄-Alkyl, insbesondere Wasserstoff.

X steht für Halogen, wie Fluor, Chlor oder Brom, insbesondere für Fluor oder Chlor.

Bedeutet T eine als Anion abspaltbare Gruppe, so handelt es sich hierbei um Halogen, wie Fluor, Chlor oder Brom, Sulfo, C₁-C₄-Alkylsulfonyl oder Phenylsulfonyl und bevorzugt um Halogen, insbesondere um Fluor oder Chlor.

Steht T für einen nicht-reaktiven Rest, so ist dieser Hydroxy, C₁-C₄-Alkoxy, C₁-C₄-Alkylthio, Morpholino oder gegebenenfalls substituiertes Amino sein. Als gegebenenfalls substituiertes Amino kommt für T unsubstituiertes Amino oder beispielsweise N-C₁-C₄-Alkylamino oder N,N-Di-C₁-C₄-Alkylamino, wobei das Alkyl gegebenenfalls z.B. durch Sulfo, Sulfato, Hydroxy, Carboxy oder Phenyl substituiert ist, Cyclohexylamino, N-C₁-C₄-Alkyl-N-phenylamino oder Phenylamino oder Naphthylamino in Betracht, wobei das Phenyl oder Naphthyl gegebenenfalls z.B. durch C₁-C₄-Alkyl, C₁-C₄-Alkoxy, C₂-C₄-Alkanoylamino, Carboxy, Sulfo oder Halogen substituiert ist, in Betracht.

Beispiele für geeignete nicht-reaktive Reste T sind Amino, Methylamino, Äthylamino, β-Hydroxyäthylamino, N,N-Di-β-Hydroxyäthylamino, β-Sulfoäthylamino, Cyclohexylamino, Morpholino, o-, m- oder p-Chlorphenylamino, o-, m- oder p-Methylphenylamino, o-, m- oder p-Methoxyphenylamino, o-, m- oder p-Sulfophenylamino, Disulfophenylamino, o-Carboxyphenylamino, 1- oder 2-Naphthylamino, 1-Sulfo-2-naphthylamino, 4,8-Disulfo-2-naphthylamino, N-Äthyl-N-phenylamino, N-Methyl-N-phenylamino, Methoxy, Äthoxy, n- oder iso-Propoxy sowie Hydroxy.

Als nicht-reaktiver Rest hat T vorzugsweise die Bedeutung C₁-C₄-Alkoxy, C₁-C₄-Alkylthio, Hydroxy, Amino, N-C₁-C₄-Alkylamino, das im Alkylteil unsubstituiert oder durch Hydroxy, Sulfato oder Sulfo substituiert ist, Morpholino, Phenylamino oder N-C₁-C₄-Alkyl-N-phenylamino, worin das Phenyl jeweils unsubstituiert oder durch Sulfo, Carboxy, Acetylamino, Methyl oder Methoxy substituiert ist.

Besonders bevorzugte nicht-reaktive Reste T sind C₁-C₄-Alkoxy, Morpholino, Phenylamino oder N-C₁-C₄-Alkyl-N-phenylamino, worin das Phenyl jeweils unsubstituiert oder durch Sulfo, Carboxy, Acetylamino, Methyl oder Methoxy substituiert ist.

Bevorzugte reaktive Reste T sind solche der Verbindungen der Formeln (5a) bis (5f), worin W eine Gruppe der Formel -CONH- oder -NHCO-, R, R₄ und R₆ Wasserstoff, E der Rest -O- oder -NH-, Hal Chlor oder Brom und U₁ eine Gruppe der Formel -Cl, -OSO₃H, -SSO₃H, -OCO-CH₃, -OCO-C₆H₅ oder -OPO₃H₂, insbesondere eine Gruppe der Formel -Cl oder -OSO₃H, ist.

Ganz besonders bevorzugte reaktive Reste T sind solche der Verbindungen der Formeln (5a) bis (5f), worin W eine Gruppe der Formel -CONH-, R, R₄ und R₆ Wasserstoff, E der Rest -O-, Hal Chlor oder Brom und U₁ eine Gruppe der Formel -Cl oder -OSO₃H, insbesondere eine Gruppe der Formel -OSO₃H, ist.

Bevorzugt handelt es sich bei T um Chlor, Fluor, C₁-C₄-Alkoxy, Morpholino, N-C₁-C₄-Alkyl-N-phenylamino oder Phenylamino, worin das Phenyl jeweils unsubstituiert oder durch Sulfo, Carboxy, Acetylamino, Methyl oder Methoxy substituiert ist, oder um einen reaktiven Rest der Formeln (5a) bis (5f), für welche die oben angegebenen Bedeutungen und Bevorzugungen gelten.

Bei X₁ handelt es sich um Halogen, insbesondere um Fluor oder Chlor.

Bevorzugt ist X₂ Chlor.

Bevorzugt als Reaktivreste der Formel (4) sind solche, worin beide Substituenten X₁ Fluor oder Chlor bedeuten und X₂ Chlor ist.

Als C₁-C₄-Alkyl kommen für R₁ Methyl, Aethyl, Propyl, Isopropyl, Butyl, Isobutyl, sek.-Butyl oder tert.-Butyl, insbesondere Methyl, in Betracht.

Für R₂ ist die Bedeutung als Cyano oder Carbamoyl bevorzugt.

Substituenten der Reste R₃ und R₃' als C₁-C₁₂-Alkyl sind z.B. Hydroxyl, Sulfo, Sulfato, Reaktivreste der Halogentriazin- oder Halogenpyrimidinreihe, insbesondere Reaktivreste der oben angegebenen Formeln (3) und (4), sowie Phenyl oder Naphthyl in Betracht, wobei die Phenyl- und Naphthylreste gegebenenfalls durch C₁-C₄-Alkyl, C₁-C₄-Alkoxy, C₂-C₄-Alkanoylamino, Halogen oder Sulfo weitersubstituiert sind. Vorzugsweise enthalten die Reste R₃ und R₃' keine Reaktivgruppe.

Die Reste B, R₃ und R₃' können durch Sauerstoff unterbrochen sein, wie z.B. durch 1 bis 3, insbesondere 1 oder 2 Reste -O-.

Der Rest B ist bevorzugt C₂-C₈-Alkylen, welches gegebenenfalls durch Hydroxyl, Sulfo oder Sulfato substituiert ist und gegebenenfalls durch 1 bis 3, insbesondere 1 oder 2 Reste -O- unterbrochen ist.

Besonders bevorzugt handelt es sich bei dem Rest B um C₂-C₆-Alkylen, insbesondere um 1,2-Aethylen, 1,3-Propylen oder 1,6-Hexylen.

Die Reste R₃ und R₃' sind bevorzugt unabhängig voneinander Wasserstoff oder gegebenenfalls durch Hydroxyl, Sulfo oder Sulfato substituiertes und mit Ausnahme von Methyl gegebenenfalls durch Sauerstoff unterbrochenes C₁-C₁₂-Alkyl.

Besonders bevorzugt handelt es sich bei den Resten R₃ und R₃' unabhängig voneinander um Wasserstoff, gegebenenfalls durch Hydroxyl, Sulfo oder Sulfato substituiertes und mit Ausnahme von Methyl gegebenenfalls durch 1 bis 3, insbesondere 1 oder 2 Reste -O- unterbrochenes C₁-C₈-Alkyl.

Bevorzugt haben die Reste R₃ und R₃' identische Bedeutungen.

Als Beispiele für Reste R₃ und R₃' seien Methyl, Aethyl, Propyl, Isopropyl, Butyl, Isobutyl, sek.-Butyl, tert.-Butyl oder geradkettiges oder verzweigtes Pentyl, Hexyl oder Octyl, 2-Hydroxyäthyl, 3-Hydroxypropyl, 2-Sulfatoäthyl, 3-Sulfatopropyl, 2-Sulfoäthyl, 3-Sulfopropyl, 2-Methoxyäthyl, 3-Methoxypropyl, sowie Reste der Formeln -(CH₂)₂-O-(CH₂)₂-OH und -(CH₂)₂-O-(CH₂)₂-OSO₃H genannt.

Die Farbstoffe der Formeln (1a), (1b) und (1c) enthalten bevorzugt jeweils mindestens eine Sulfo- oder Sulfatogruppe, insbesondere mindestens eine Sulfogruppe, enthalten. Besonders bevorzugt enthalten sie 1 bis 4, insbesondere 2 bis 4 Sulfo- und/oder Sulfatogruppen; vorzugsweise 2 bis 4 Sulfogruppen.

Die Reste D und D' sind bevorzugt Reste der Benzol- oder Naphthalinreihe oder Reste eines Monoazofarbstoffes, welcher eine Diazokomponente der Benzol- oder Naphthalinreihe und eine Kupplungskomponente der Benzol- oder Naphthalinreihe enthält, wobei die genannten Benzol- und Naphthalinreste gegebenenfalls durch C₁-C₄-Alkyl, durch Hydroxy oder C₁-C₄-Alkoxy weitersubstituiertes C₁-C₄-Alkyl, C₁-C₄-Alkoxy, C₂-C₄-Alkanoylamino, Halogen, Sulfo oder einen Reaktivrest der Formeln (2a) bis (2g), (3) oder (4) substituiert sind. Für die Reaktivreste der Formeln (2a) bis (2g), (3) und (4) gelten die oben genannten Bedeutungen und Bevorzugungen.

Besonders bevorzugt sind D und D' unabhängig voneinander ein Rest der Formel 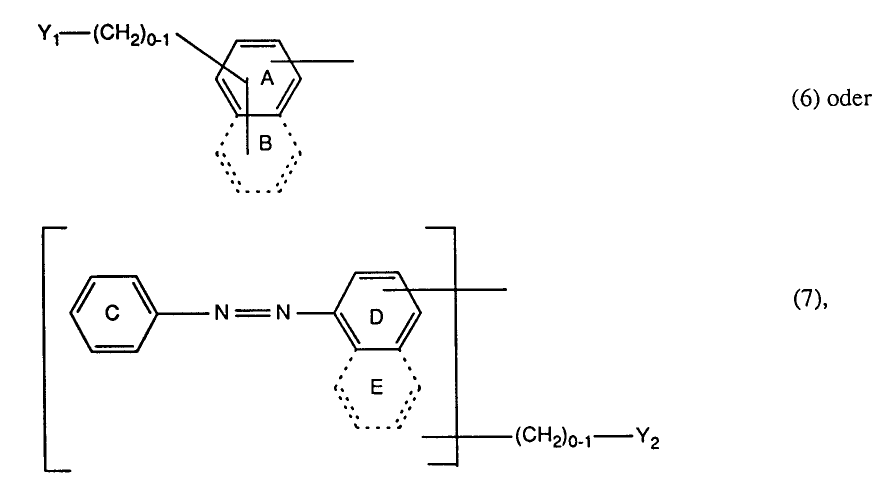 worin die Ringe A, B, C, D und E unabhängig voneinander gegebenenfalls durch C₁-C₄-Alkyl, durch Hydroxy oder C₁-C₄-Alkoxy weitersubstituiertes C₁-C₄-Alkyl, C₁-C₄-Alkoxy, C₂-C₄-Alkanoylamino, Halogen oder Sulfo substituiert sind und Y₁ und Y₂ unabhängig voneinander ein Reaktivrest der Formeln (2a) bis (2g), (3) oder (4) sind. Für die Reaktivreste der Formeln (2a) bis (2g), (3) und (4) gelten die oben genannten Bedeutungen und Bevorzugungen.

Bevorzugt haben die Reste D und D' identische Bedeutungen.

Bevorzugt sind Farbstoffmischungen der Reaktivfarbstoffe der Formeln (1a), (1b) und (1c), worin D und D' identische Bedeutungen haben und R₃ und R₃' identische Bedeutungen haben.

Besonders bevorzugt sind Farbstoffmischungen der Reaktivfarbstoffe der Formeln (1a), (1b) und (1c), worin D und D' identische Bedeutungen haben und einen Rest der Formel (6) oder (7) bedeuten, R₁ Methyl, R₂ Cyano oder Carbamoyl ist, R₃ und R₃' identische Bedeutungen haben und Wasserstoff oder gegebenenfalls durch Hydroxyl, Sulfo oder Sulfato substituiertes und mit Ausnahme von Methyl gegebenenfalls durch Sauerstoff unterbrochenes C₁-C₁₂-Alkyl sind und B C₂-C₆-Alkylen bedeutet.

Für die Farbstoffmischungen sind insbesondere Mischungen, welche einen Reaktivfarbstoff der Formel (1a) zusammen mit einem Reaktivfarbstoff der Formel (1b) enthalten, bevorzugt. Für die Reaktivfarbstoffe der Formeln (1a) und (1b) gelten hierbei die oben genannten Bedeutungen und Bevorzugungen.

Durch beispielsweise flüssigchromatographische Trennung können prinzipiell die Einzelfarbstoffe der Formeln (1a), (1b) und (1c) erhalten werden, welche einen weiteren Gegenstand der vorliegenden Erfindung darstellen. Von besonderer Bedeutung ist hierbei der Reaktivfarbstoff der Formel (1b).

Ein weiterer Gegenstand der vorliegenden Erfindung ist ein Verfahren zur Herstellung der erfindungsgemässen Farbstoffmischungen, welches dadurch gekennzeichnet ist, dass man mindestens ein Amin der Formeln

D-NH₂ (8a)

und

D'-NH₂ (8b),

worin D und D' die oben angegebenen Bedeutungen haben, diazotiert und auf eine Mischung, welche eine Verbindung der Formel 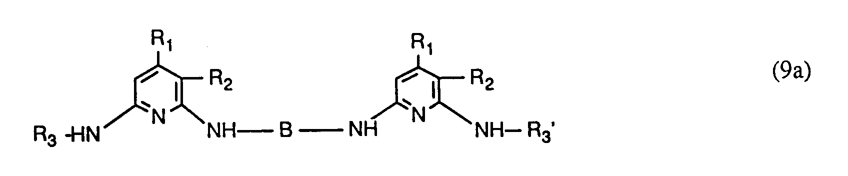 zusammen mit mindestens einer Verbindung der Formeln 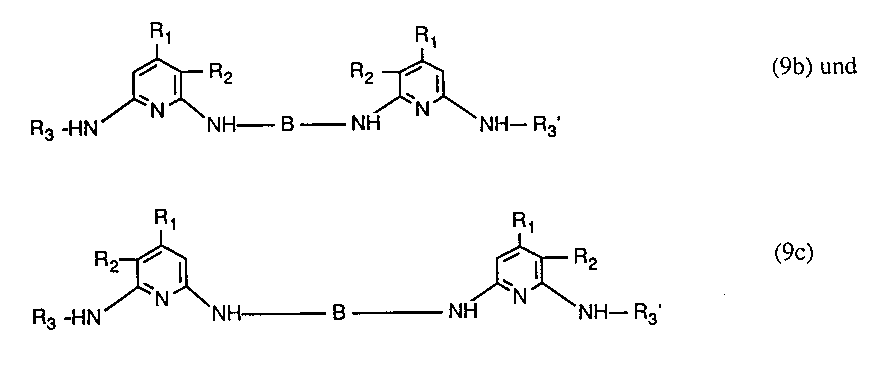 enthält, worin R₁, R₂, R₃, R₃' und B die oben angegebenen Bedeutungen haben, kuppelt, und gegebenenfalls eine weitere Umwandlungsreaktion anschliesst.

Die Diazotierung der Amine der Formeln (8a) und (8b) erfolgt in der Regel durch Einwirken salpetriger Säure in wässrig-mineralsaurer Lösung bei tiefer Temperatur, wie z.B. 0 bis 10°C, die Kupplung auf die Mischung der Verbindungen der Formeln (9a), (9b) und (9c) bei sauren, neutralen bis schwach alkalischen pH-Werten, insbesondere bei einem pH-Wert von 2 bis 8.

Die Amine der Formeln (8a) und (8b) sind bekannt oder können in Analogie zu bekannten Verbindungen hergestellt werden.

Eine abgewandelte Ausführungsform des Verfahrens besteht darin, dass man zunächst Farbstoffe herstellt, die eine Vorstufe des Reaktivrestes enthalten, und diese nachträglich in die Endstufe umwandelt, z.B. durch Veresterung oder eine Additionsreaktion.

Beispielsweise kann man Farbstoffe, worin Z ein Rest HO-CH₂CH₂- ist, herstellen und diese Produkte mit Schwefelsäure umsetzen, so dass die Hydroxygruppe in die Sulfatogruppe überführt wird. Die Sulfatierung der Hydroxygruppe erfolgt z.B. durch Umsetzung mit konzentrierter Schwefelsäure bei ca. 0°C bis mässig erhöhter Temperatur.

Ausserdem können Eliminierungsreaktionen an die Synthese angeschlossen werden. Beispielsweise kann man Reaktivfarbstoffe, welche Sulfatoäthylsulfonylreste enthalten, mit einer Base, wie z.B. Natriumhydroxid, behandeln, wobei die Sulfatoäthylsulfonylreste in Vinylsulfonylreste übergehen.

Grundsätzlich lassen sich die Mischungen der Reaktivfarbstoffe der Formeln (1a), (1b) und (1c) herstellen, indem man von entsprechenden Mischungen von Vorprodukten oder Zwischenprodukten für Farbstoffe, die faserreaktive Reste enthalten, ausgeht, oder diese faserreaktiven Reste in hierfür geeignete Zwischenprodukte mit Farbstoffcharakter einführt.

Die Mischungen der Verbindungen der Formeln (9a), (9b) und (9c) können erhalten werden, indem man eine Verbindung der Formel 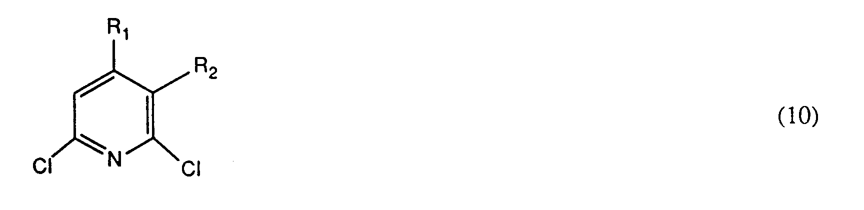 mit Aminen der Formeln

NH₂-R₇ (11)

und

NH₂-B-NH₂ (12)

umsetzt und gegebenenfalls eine weitere Umwandlungsreaktion anschliesst, wobei B, R₁ und R₂ die oben angegebenen Bedeutungen haben und R₇ die für R₃ und R₃' angegebenen Bedeutungen hat.

Die Umsetzung erfolgt beispielsweise bei einer Temperatur von ca. 70 bis 130°C, insbesondere 70 bis 90°C, in einem Lösungsmittel, wie z.B. N,N-Diäthylanilin, Triäthylamin höheren Alkoholen oder Ketonen, oder man verwendet die Amine der Formeln (11) und (12) selbst als Lösungsmittel. Die Umsetzung erfolgt in Gegenwart einer Base, wobei ein geeignetes Lösungsmittel selbst als Base fungieren kann oder eine Base, wie z.B. Natriumcarbonat oder Kaliumcarbonat, zugesetzt wird.

Durch geeignete Wahl der Reaktionsbedingungen können die Chloratome der Verbindung der Formel (10) stufenweise substituiert werden, was die Isolierung der einzelnen Mono-oder Disubstitutionsprodukte erlaubt.

So wird in einem ersten Schritt bei niedrigerer Temperatur, wie z.B. 10 bis 50°C, vorwiegend das sich in para-Stellung zum Rest R₂ befindende Chlor-Atom abgespalten, während in einem zweiten Schritt bei höherer Temperatur, wie z.B. 70 bis 120°C, das sich in ortho-Stellung zum Rest R₂ befindende Chlor-Atom abgespalten wird.

Werden somit die Amine der Formeln (11) und (12) nicht zusammen, sondern nacheinander zugegeben, so kann entweder die Verbindung der Formel (9b) oder die Verbindung der Formel (9c) als Hauptprodukt erhalten werden. Hierbei hat es sich als vorteilhaft erwiesen, das nach Reaktion des im ersten Schritt bei niedrigerer Temperatur erhaltene monosubstituierte Zwischenprodukt zu isolieren und danach den zweiten Schritt, die Umsetzung des zweiten Amins bei höherer Temperatur, auszuführen.

Wird daher im ersten Schritt bei niedriger Temperatur das Amin der Formel (11) und im zweiten Schritt bei höherer Temperatur das Amin der Formel (12) zugegeben, so wird als Hauptverbindung die Verbindung der Formel (9b) erhalten. Werden die Amine in umgekehrter Reihenfolge eingesetzt, so wird als Hauptverbindung die Verbindung der Formel (9c) erhalten.

Die Verbindung der Formel (9a) ist in der Regel unabhängig von der Reihenfolge der Zugabe der Amine der Formeln (11) und (12) ein Bestandteil der erhaltenen Mischung.

Die Verbindungen der Formeln (10), (11) und (12) sind bekannt oder können in Analogie zu bekannten Verbindungen hergestellt werden.

Die eine Sulfo- oder Sulfatogruppe enthaltenden Farbstoffe der Formeln (1a), (1b) und (1c) liegen entweder in der Form ihrer freien Säure oder vorzugsweise als deren Salze vor.

Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Mono-, Di- oder Triäthanolamins genannt.

Die erfindungsgemässen Farbstoffmischungen eignen sich zum Färben und Bedrucken der verschiedensten Materialien, wie hydroxylgruppenhaltigen oder stickstoffhaltigen Fasermaterialien. Als Beispiele seien Seide, Leder, Wolle, Polyamidfasern und Polyurethane, und insbesondere cellulosehaltige Fasermaterialien aller Art genannt. Solche cellulosehaltige Fasermaterialien sind beispielsweise die natürlichen Cellulosefasern, wie Baumwolle, Leinen und Hanf, sowie Zellstoff und regenerierte Cellulose. Die erfindungsgemässen Farbstoffmischungen sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern. Besonders geeignet sind die erfindungsgemässen Farbstoffmischungen zum Färben oder Bedrucken von cellulosehaltigen Fasermaterialien oder insbesondere natürlichen oder synthetischen Polyamidfasermaterialien.

Die erfindungsgemässen Farbstoffmischungen lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung, fixiert werden. Besonders geeignet sind sie für das sogenannte Kaltverweilverfahren, wonach der Farbstoff zusammen mit dem Alkali auf dem Foulard aufgebracht wird und danach durch mehrstündiges Lagern bei Raumtemperatur fixiert wird. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Die erfindungsgemässen Farbstoffmischungen zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch und die nicht fixierten Anteile können leicht ausgewaschen werden, wobei die Differenz zwischen Ausziehgrad und Fixiergrad bemerkenswert klein, d.h. der Seifverlust sehr gering ist. Die erfindungsgemässen Farbstoffmischungen eignen sich auch besonders zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemässen Farbstoffmischungen hergestellten Färbungen und Drucke besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe-und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Beispiel 1: 187 Teile 2,6-Dichlor-3-cyan-4-methylpyridin werden bei einer Temperatur von 20 bis 30°C in 427 Teile Aethanolamin eingetragen. Man rührt das Gemisch 2 Stunden bei 20 bis 30°C. Die klare braune Lösung wird auf 3000 Teile Eiswasser ausgetragen. Der entstandene Niederschlag wird abfiltriert, mit Wasser gewaschen und getrocknet.

Man erhält 180 Teile eines Gemisches der Verbindungen der Formeln 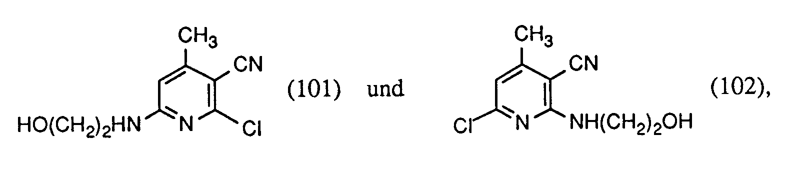 wobei das Verhältnis der Verbindung der Formel (101) zur Verbindung der Formel (102) 3:1 ist.

180 Teile des wie angegeben erhaltenen Gemisches der Verbindungen der Formeln (101) und (102) werden in 685 Teilen Triäthylamin eingetragen und auf Rückfluss erhitzt. Man tropft 31,5 Teile 1,3-Diaminopropan langsam zu und verrührt weitere 5 Stunden am Rückfluss. Nach beendetem Umsatz streut man 45 Teile Natriumcarbonat ein und destilliert das Triäthylamin ab. Der entstandene Rückstand wird auf 3000 Teile Eiswasser ausgetragen und der entstandene Niederschlag abfiltriert und mit Wasser gewaschen. Nach dem Trocknen erhält man 160 Teile eines Gemisches der Verbindungen der Formeln 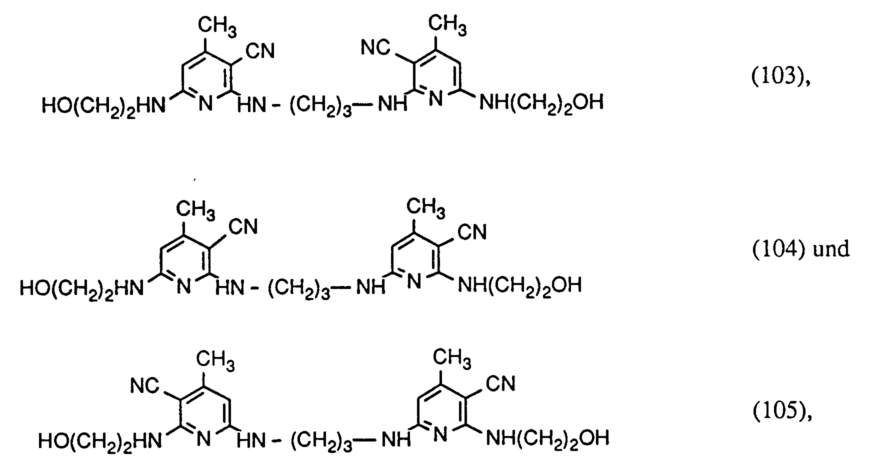 wobei der Anteil der Verbindung der Formel (103) ca. 60%, der der Verbindung der Formel (104) ca. 35% und der der Verbindung der Formel (105) ca. 5% ist.

Beispiel 2: 187 Teile 2,6-Dichlor-3-cyan-4-methyl-pyridin werden bei einer Temperatur von 40 bis 50°C in 800 Teile Triethylamin eingetragen. Zu dieser Suspension lässt man 37 Teile 1,3-Diaminopropan zutropfen und lässt noch 5 Stunden bei 40 bis 50°C nachrühren. Man erhält eine Suspension, welche die Verbindungen der Formeln 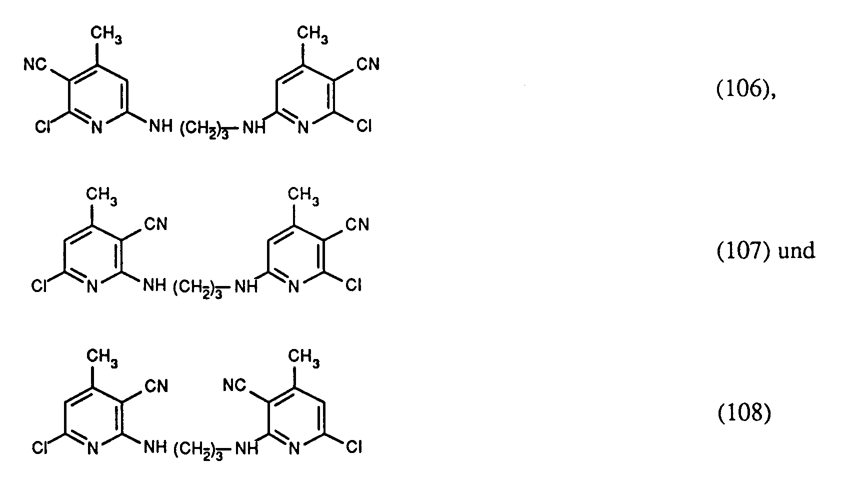 enthält, wobei der Anteil der Verbindung der Formel (106) ca. 60%, der der Verbindung der Formel (107) ca. 35% und der der Verbindung der Formel (108) ca. 5% ist.

Zu der so erhaltenen Suspension werden 500 Teile Ethanolamin zugegeben. Die Temperatur wird danach auf Rückfluss erhöht und Triethylamin abdestilliert. Während des Abdestillierens des Triethylamins werden nochmals 500 Teile Ethanolamin zugegeben, damit die Suspension nicht zu dick wird. Nach Erreichen einer inneren Temperatur von 115°C wird noch 2 Stunden bei dieser Temperatur nachgerührt. Die dunkle Lösung wird auf Raumtemperatur abgekühlt und auf 6000 Teile Wasser ausgetragen. Die entstandene Suspension wird abfiltriert und mit Wasser gewaschen. Nach dem Trocknen erhält man ca. 150 Teile eines Gemisches der Verbindungen der Formeln 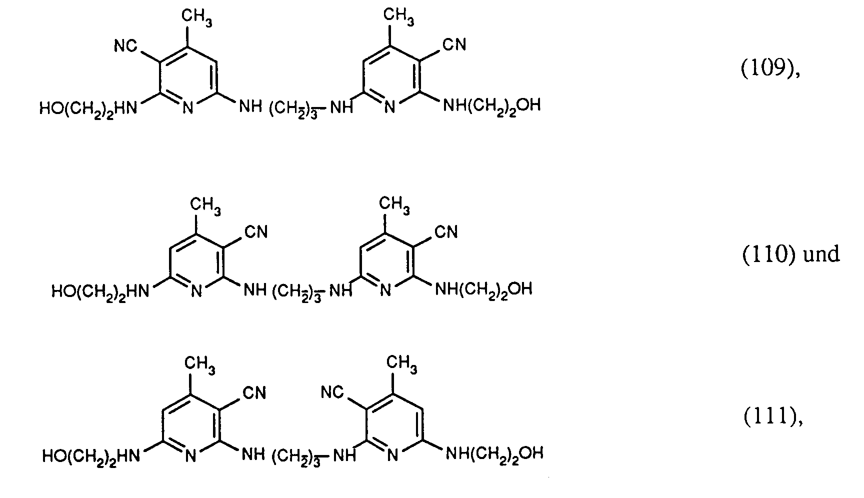 wobei der Anteil der Verbindung der Formel (109) ca. 60%, der der Verbindung der Formel (110) ca. 35% und der der Verbindung der Formel (111) ca. 5% ist.

Beispiele 3 bis 15: Analog zu Beispiel 1 können entsprechende Mischungen von Pyridinverbindungen erhalten werden, die die in der folgenden Tabelle 1 in Spalte 2 angegebenen Pyridinverbindungen als Haupkomponente enthalten. Die Mischungen enthalten drei Komponenten, welche sich nur dadurch unterscheiden, dass die Cyano-bzw. Carbamoylgruppe in 3- oder in 5-Stellung an den jeweiligen Pyridinring gebunden ist.

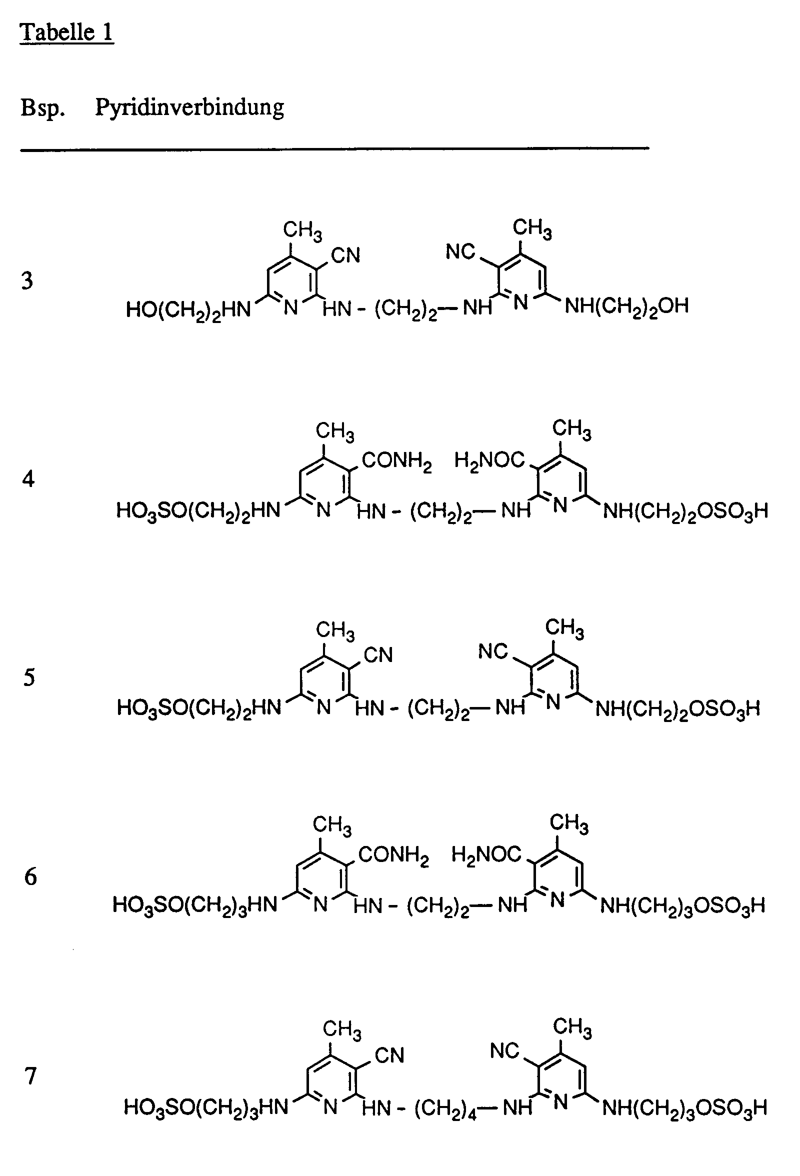

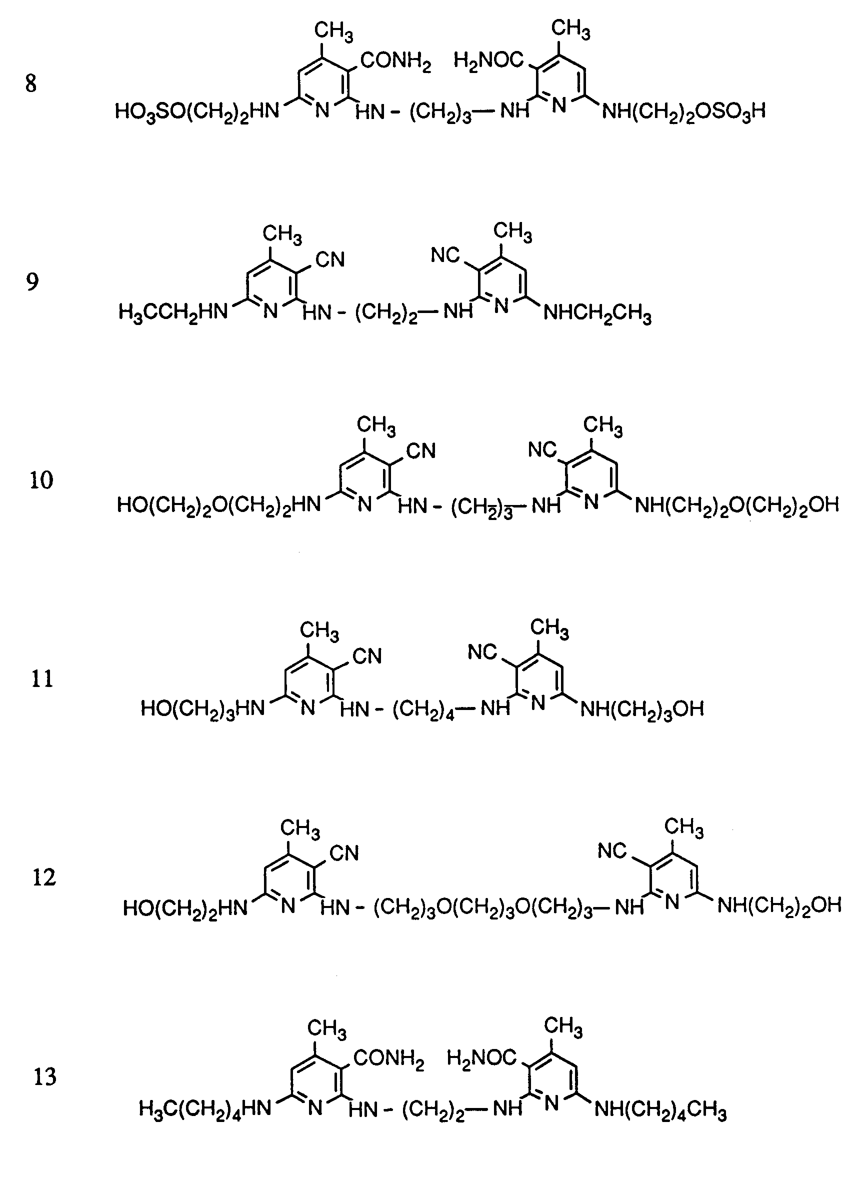

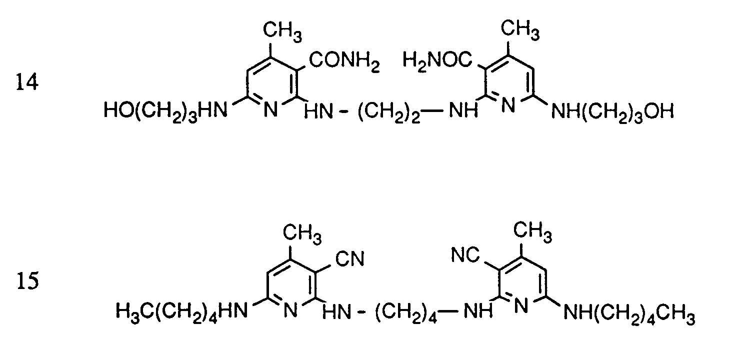

Beispiel 16: 24,4 Teile Anilin-2-β-sulfatoäthylsulfon-5-sulfonsäure in 200 Teilen Eiswassersuspension werden mit 15 Teilen konzentrierter wässriger Salzsäure angesäuert und mit 13,6 Teilen einer 5-normalen Natriumnitritlösung diazotiert. Man rührt eine Stunde bei einer Temperatur von ca. 5°C nach und zerstört dann überschüssige salpetrige Säure mit Amidosulfonsäure. Die so hergestellte Diazoniumsalzlösung lässt man dann bei einem pH-Wert von 4 bis 5 langsam in eine Suspension einlaufen, welche in 100 Teilen Wasser 8 Teile eines Gemisches der Verbindungen der Formeln 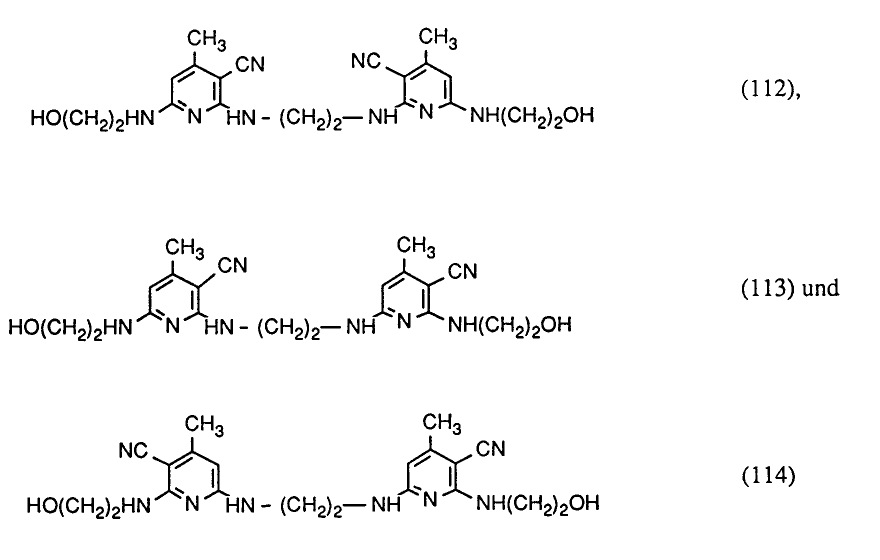 enthält, wobei das Verhältnis der Verbindungen der Formeln (112), (113) und (114) ca. 12:7:1 ist. Der pH-Wert wird durch Zugabe einer Natriumcarbonatlösung auf 6 bis 7 eingestellt. Man rührt 2 Stunden bis zur vollständigen Kupplung nach. Dann wird das erhaltene Produkt umkehrosmotisiert und gefriergetrocknet. Man erhält eine Mischung, welche die in Form der freien Säuren angegebenen Farbstoffe der Formeln 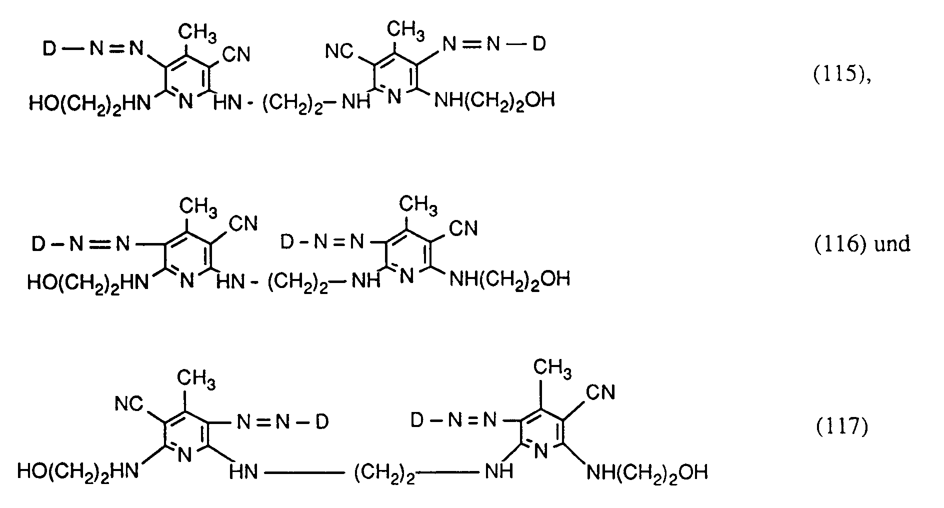 enthält, wobei in den Verbindungen der Formeln (115), (116) und (117) der Rest D jeweils ein Rest der Formel 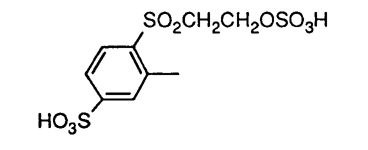 ist und das Verhältnis der Verbindungen der Formeln (115), (116) und (117) ca. 12:7:1 ist.

Die Mischung der Farbstoffe der Formeln (115), (116) und (117) färbt Baumwolle und Wolle in brillanten orangen Tönen.

Beispiel 17: 22 Teile 2-Naphthylamino-1-sulfo-6-β-sulfatoäthylsulfon in 200 Teilen Eiswassersuspension werden mit 15 Teilen konzentrierter wässriger Salzsäure angesäuert und mit 13,6 Teilen einer 5-normalen Natriumnitritlösung diazotiert. Man rührt eine Stunde bei einer Temperatur von ca. 5°C nach und zerstört dann überschüssige salpetrige Säure mit Amidosulfonsäure. Die so hergestellte Diazoniumsalzlösung lässt man dann bei einem pH-Wert von 4 bis 5 langsam in eine Suspension einlaufen, welche in 100 Teilen Wasser 7,5 Teile eines Gemisches der Verbindungen der Formeln (112), (113) und (114) enthält, wobei das Verhältnis der Verbindungen der Formeln (112), (113) und (114) ca. 12:7:1 ist. Der pH-Wert wird durch Zugabe einer Natriumcarbonatlösung auf 6 bis 7 eingestellt. Man rührt 2 Stunden bis zur vollständigen Kupplung nach. Dann wird das erhaltene Produkt umkehrosmotisiert und gefriergetrocknet. Man erhält eine Mischung, welche die in Form der freien Säuren angegebenen Farbstoffe der Formeln 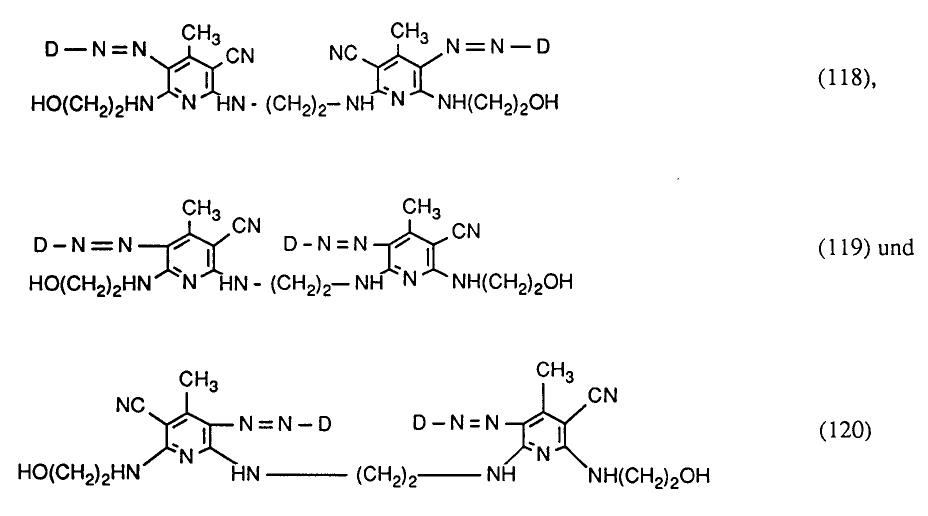 enthält, wobei in den Verbindungen der Formeln (118), (119) und (120) der Rest D jeweils ein Rest der Formel 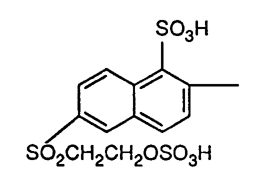 ist und das Verhältnis der Verbindungen der Formeln (118), (119) und (120) ca. 12:7:1 ist.

Die Mischung der Farbstoffe der Formeln (118), (119) und (120) färbt Baumwolle und Wolle in brillanten orangen Tönen.

Beispiel 18: 18 Teile 5-(2',3'-Dibrompropionamido)anilin-2-sulfonsäure in 200 Teilen Eiswassersuspension werden mit 15 Teilen konzentrierter wässriger Salzsäure angesäuert und mit 13,6 Teilen einer 5-normalen Natriumnitritlösung diazotiert. Man rührt eine Stunde bei einer Temperatur von ca. 5 bis 15°C nach und zerstört dann überschüssige salpetrige Säure mit Amidosulfonsäure. Die so hergestellte Diazoniumsalzlösung lässt man dann bei einem pH-Wert von 4 bis 5 langsam in eine Suspension einlaufen, welche in 100 Teilen Wasser 7,4 Teile eines Gemisches der Verbindungen der Formeln (112), (113) und (114) enthält, wobei das Verhältnis der Verbindungen der Formeln (112), (113) und (114) ca. 12:7:1 ist. Der pH-Wert wird durch Zugabe einer Natriumcarbonatlösung auf 6 bis 7 eingestellt. Man rührt 2 Stunden bis zur vollständigen Kupplung nach. Dann wird das erhaltene Produkt umkehrosmotisiert und gefriergetrocknet. Man erhält eine Mischung, welche die in Form der freien Säuren angegebenen Farbstoffe der Formeln 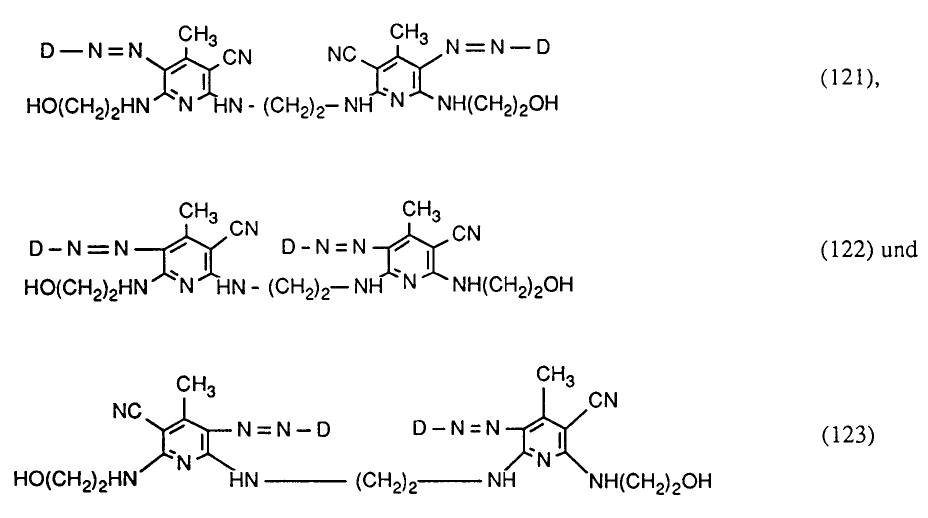 enthält, wobei in den Verbindungen der Formeln (121), (122) und (123) der Rest D jeweils ein Rest der Formel 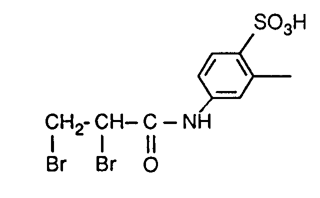 ist und das Verhältnis der Verbindungen der Formeln (121), (122) und (123) ca. 12:7:1 ist.

Die Mischung der Farbstoffe der Formeln (121), (122) und (123) färbt Baumwolle und Wolle in brillanten gelben Tönen.

Beispiel 19: 18 Teile 4-(2',3'-Dibrompropionamido)anilin-2-sulfonsäure in 200 Teilen Eiswassersuspension werden mit 15 Teilen konzentrierter wässriger Salzsäure angesäuert und mit 13,6 Teilen einer 5-normalen Natriumnitriflösung diazotiert. Man rührt eine Stunde bei einer Temperatur von ca. 5 bis 15°C nach und zerstört dann überschüssige salpetrige Säure mit Amidosulfonsäure. Die so hergestellte Diazoniumsalzlösung lässt man dann bei einem pH-Wert von 4 bis 5 langsam in eine Suspension einlaufen, welche in 100 Teilen Wasser 7,4 Teile eines Gemisches der Verbindungen der Formeln (112), (113) und (114) enthält, wobei das Verhältnis der Verbindungen der Formeln (112), (113) und (114) ca. 12:7:1 ist. Der pH-Wert wird durch Zugabe einer Natriumcarbonatlösung auf 6 bis 7 eingestellt. Man rührt 2 Stunden bis zur vollständigen Kupplung nach. Dann wird das erhaltene Produkt umkehrosmotisiert und gefriergetrocknet. Man erhält eine Mischung, welche die in Form der freien Säuren angegebenen Farbstoffe der Formeln 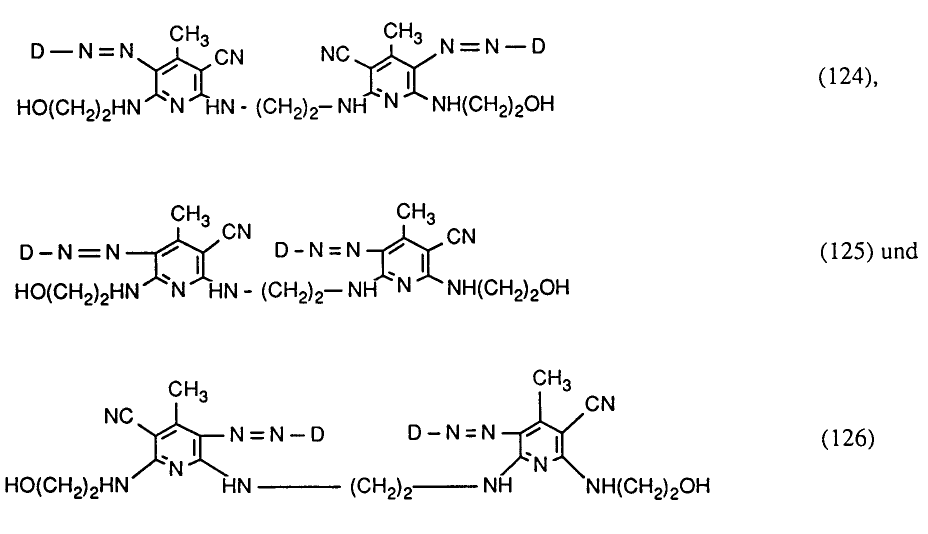 enthält, wobei in den Verbindungen der Formeln (124), (125) und (126) der Rest D jeweils ein Rest der Formel 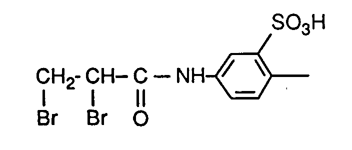 ist und das Verhältnis der Verbindungen der Formeln (124), (125) und (126) ca. 12:7:1 ist.

Die Mischung der Farbstoffe der Formeln (124), (125) und (126) färbt Baumwolle und Wolle in brillanten orangen Tönen.

### Beispiele 20 bis 65:

Analog zu den Beispielen 16 bis 19 können entsprechende Mischungen von Reaktivfarbstoffen erhalten werden, die die in der folgenden Tabelle 2 in Spalte 2 angegebenen Reaktivfarbstoffe als Haupkomponente enthalten. Die Mischungen enthalten drei Komponenten, welche sich nur dadurch unterscheiden, dass die Cyano-bzw. Carbamoylgruppe in 3- oder in 5-Stellung an den jeweiligen Pyridinring gebunden ist. Die in Spalte 2 angegebenen Reaktivfarbstoffmischungen färben Baumwolle und Wolle in den in Spalte 3 angegebenen Farbtönen.

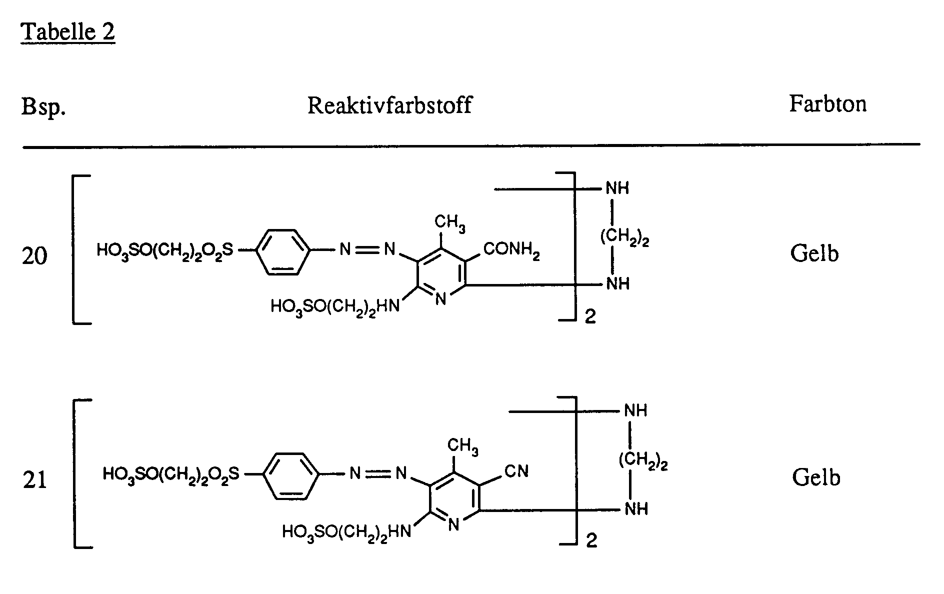

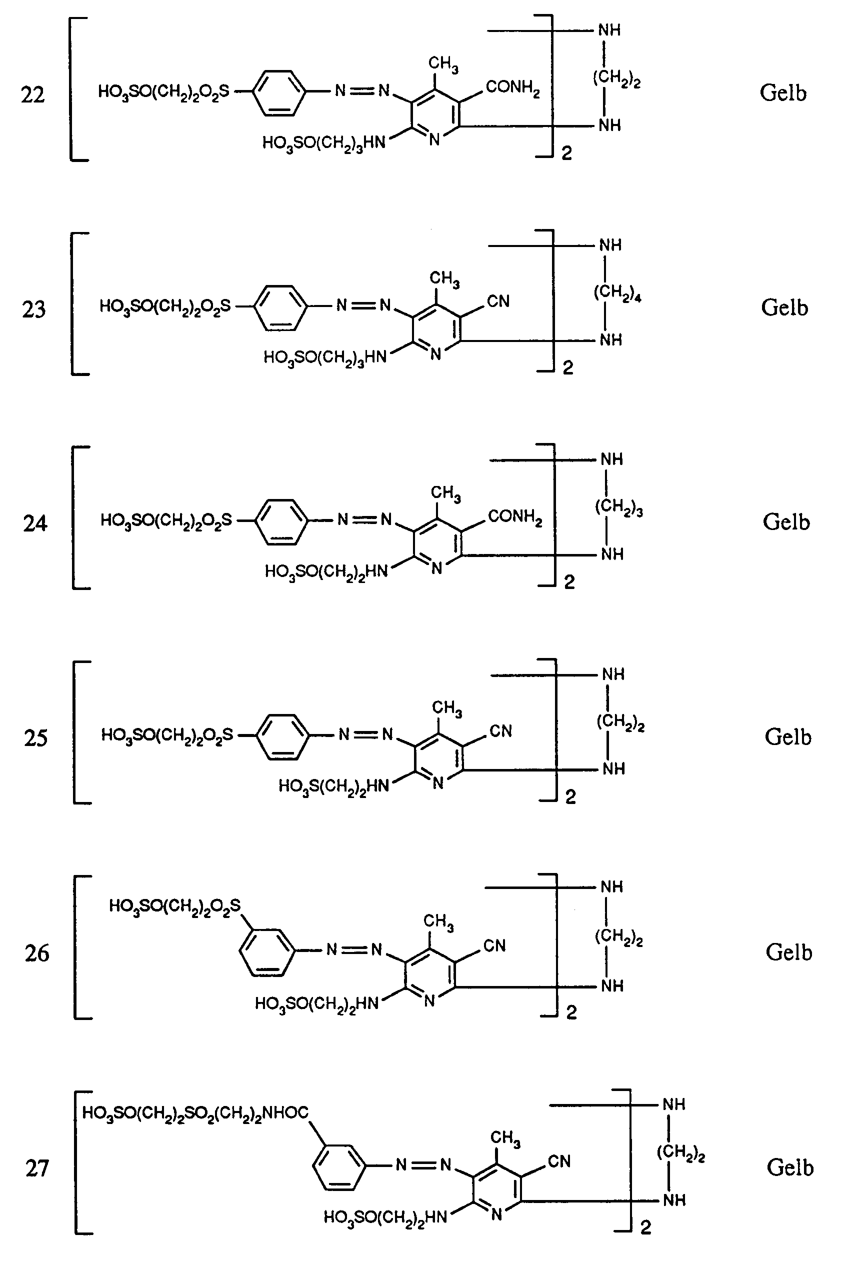

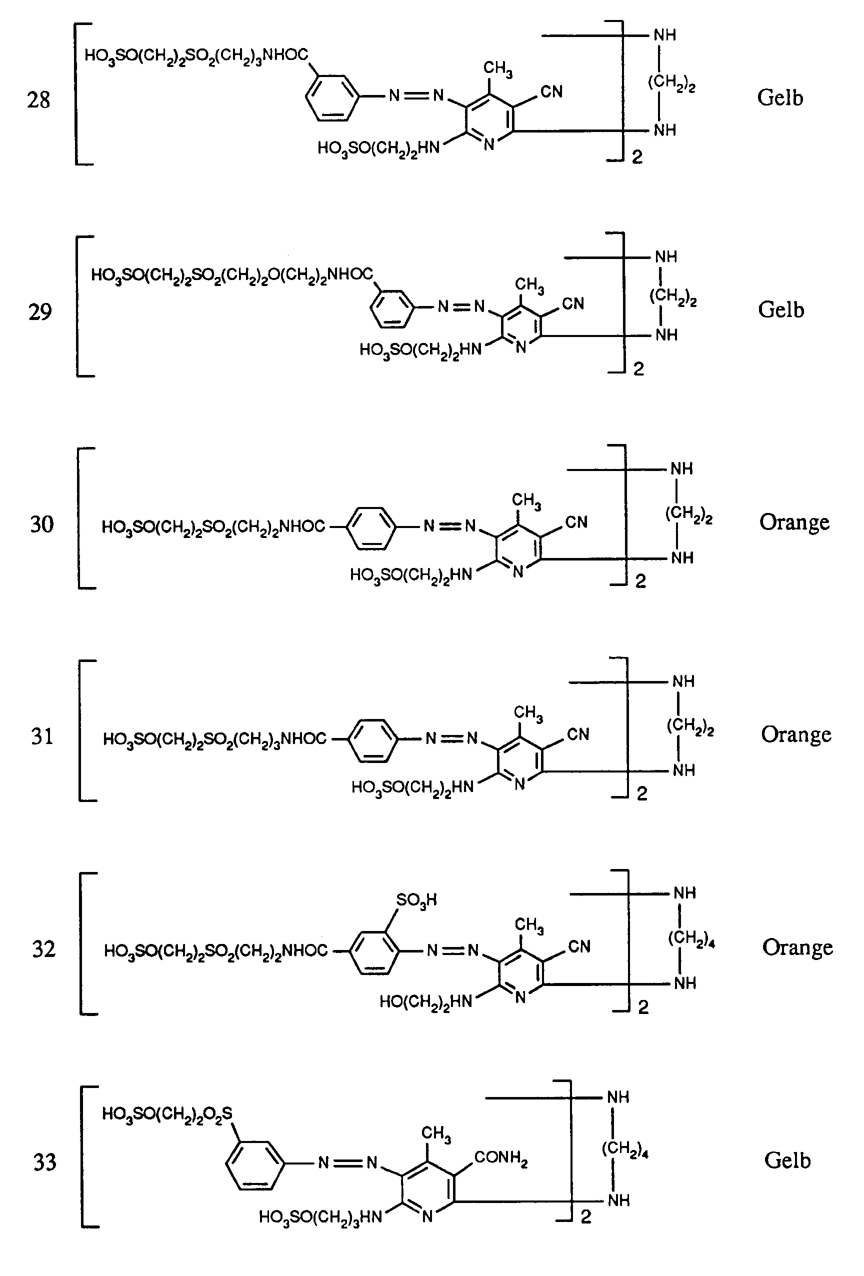

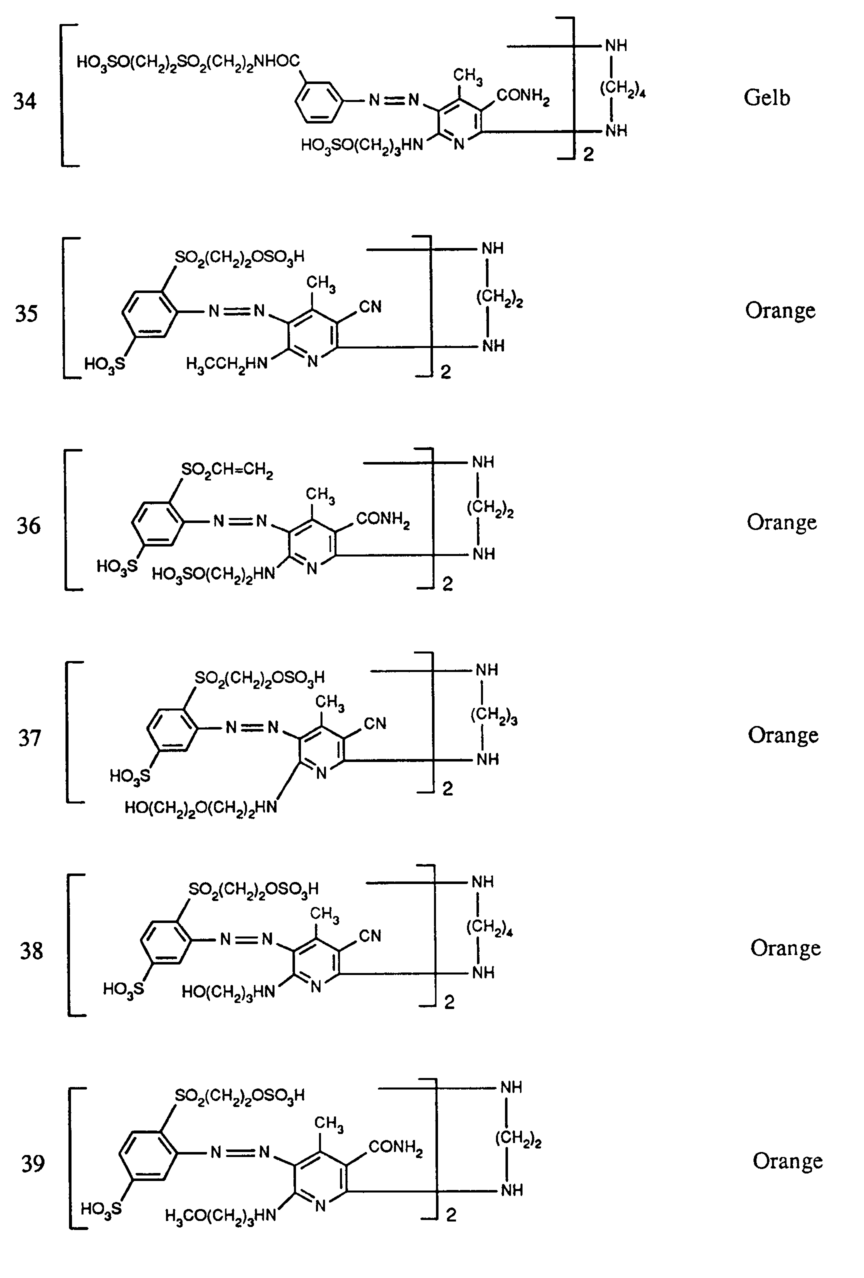

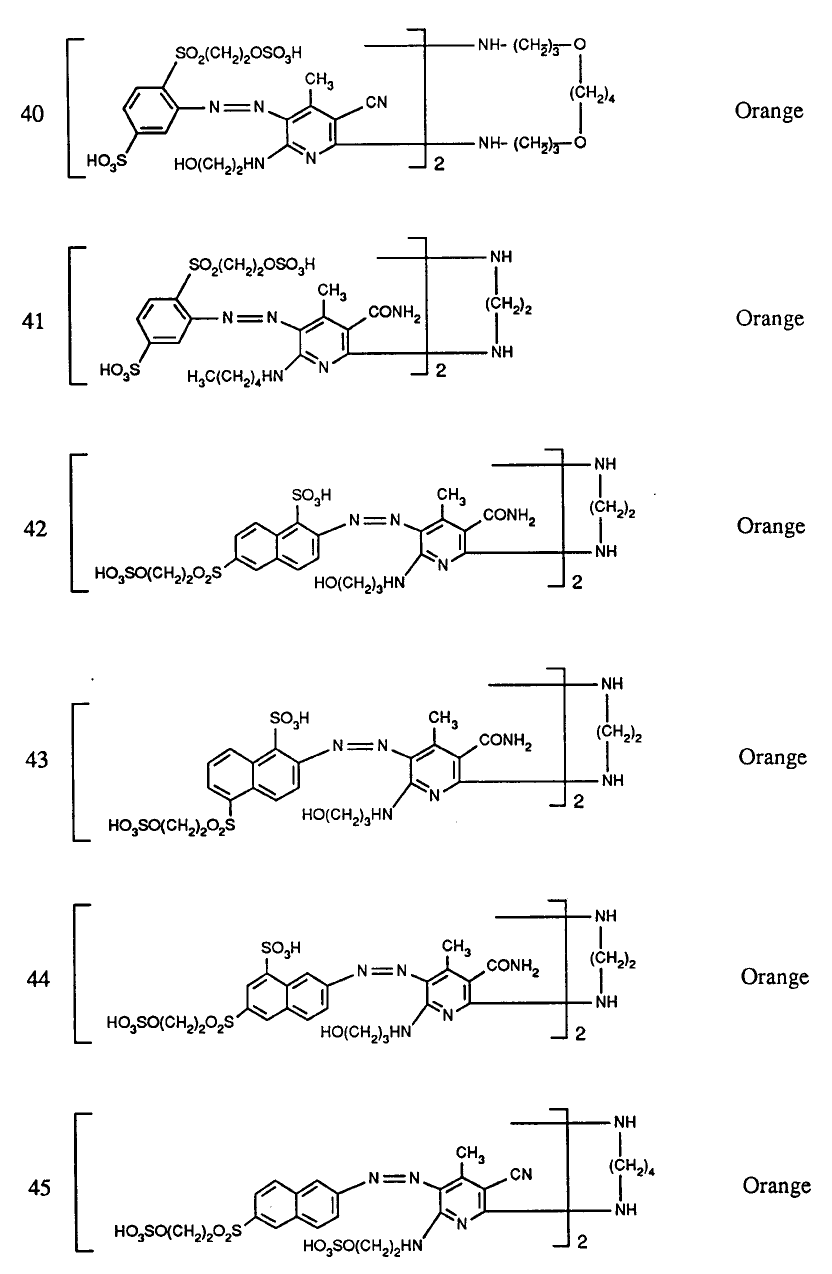

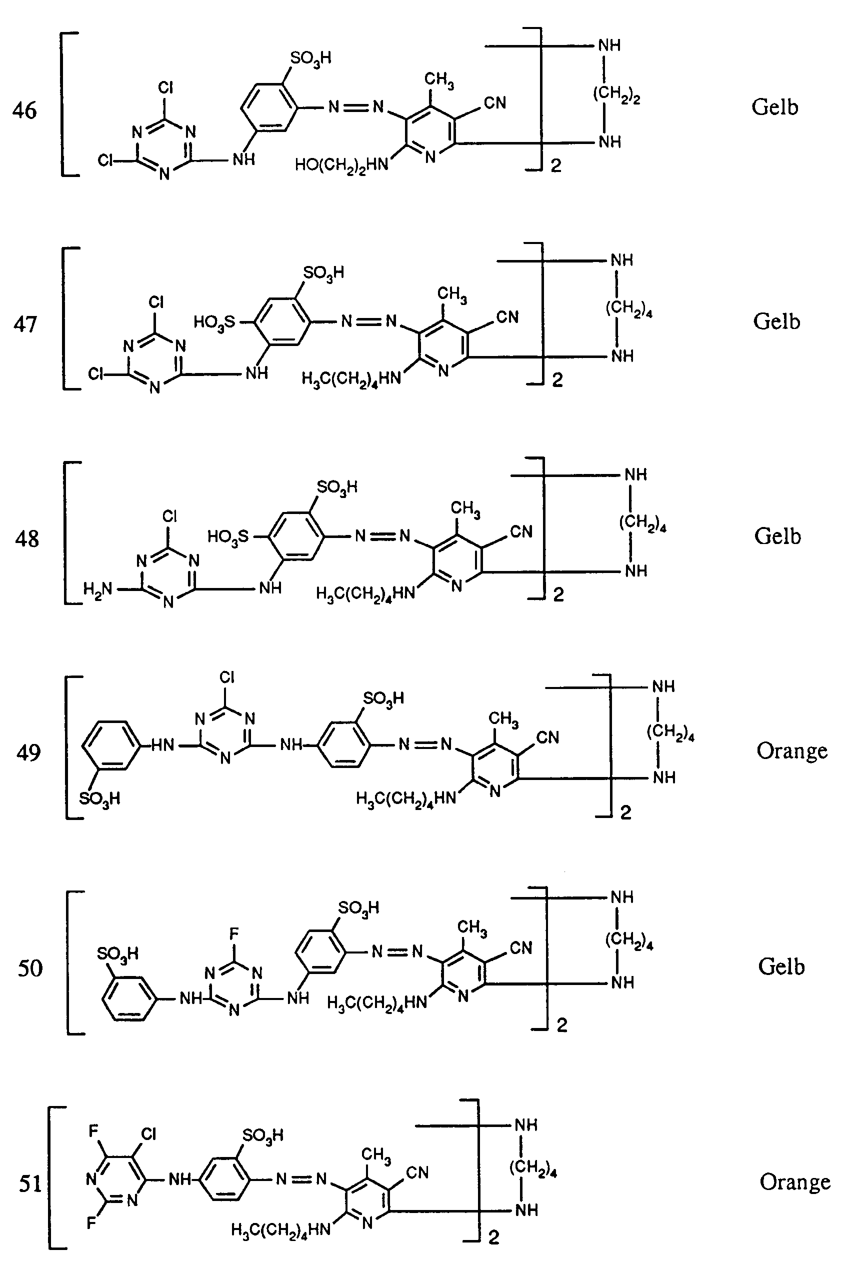

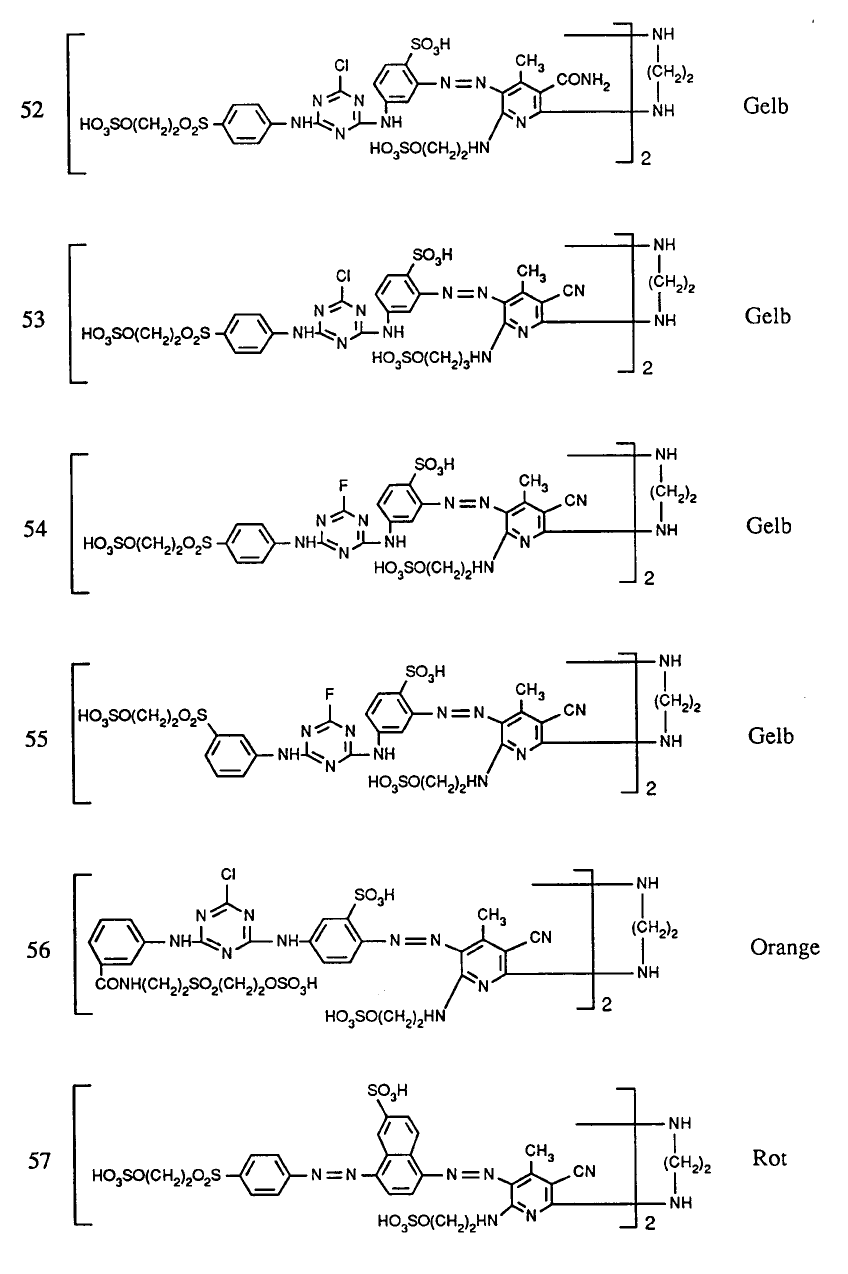

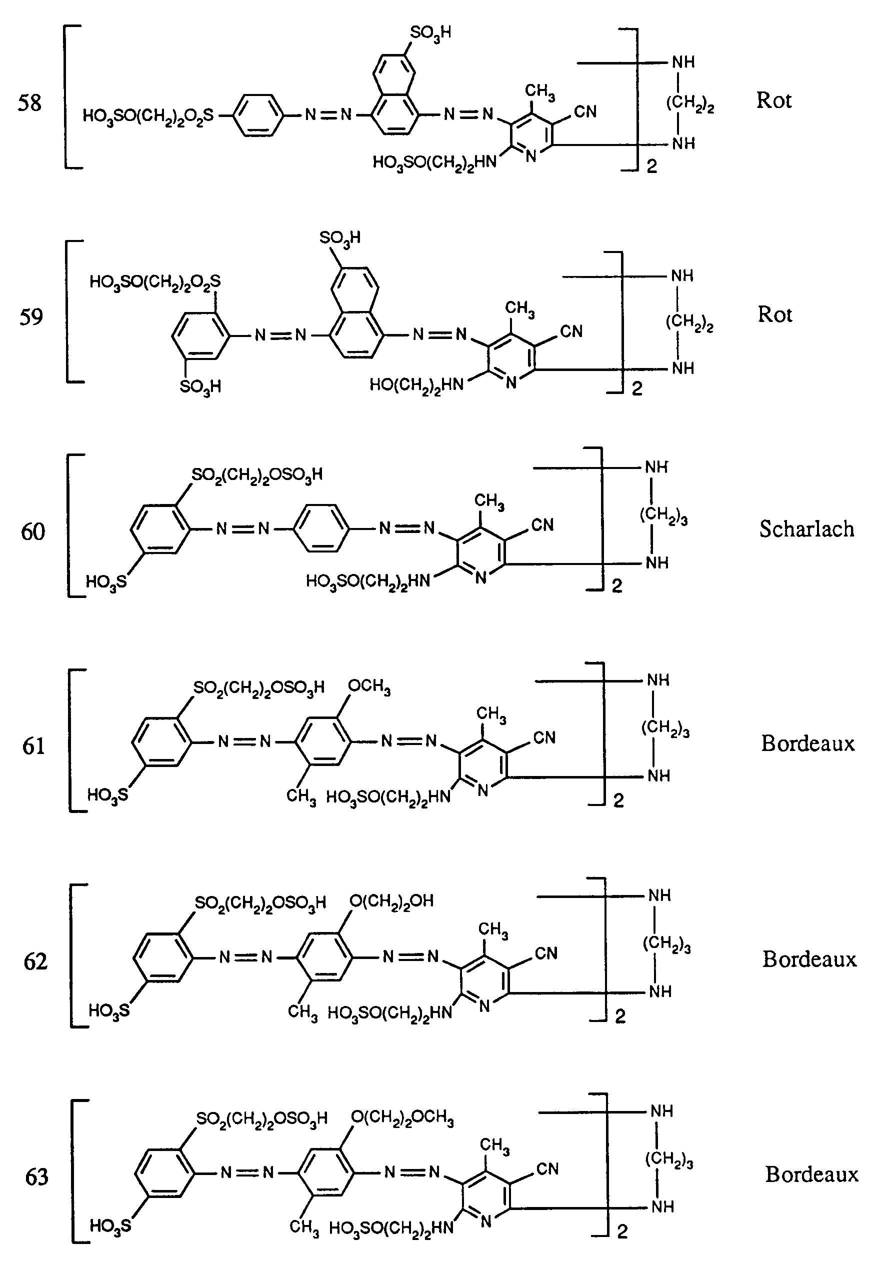

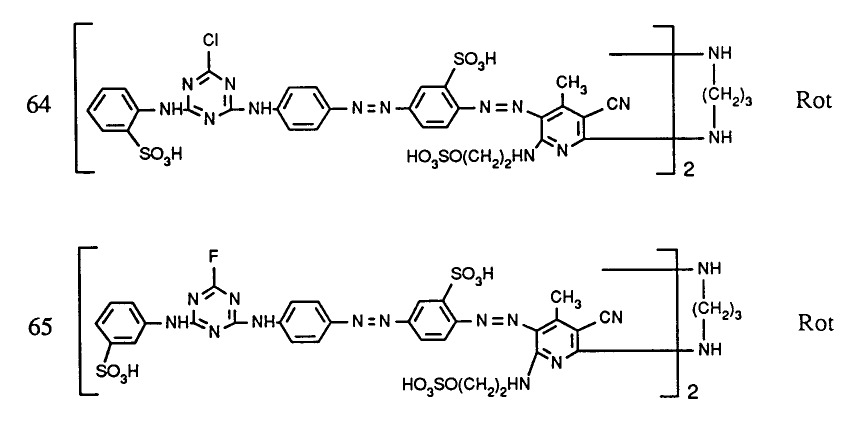

### Färbevorschrift

2 Teile der gemäss Beispiel 16 erhaltenen Reaktivfarbstoffmischung werden in 400 Teilen Wasser gelöst; dazu gibt man 1500 Teile einer Lösung, die pro Liter 53 g Natriumchlorid enthält. In dieses Färbebad geht man bei 40°C mit 100 Teilen Baumwollgewebe ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

### Druckvorschrift

3 Teile der gemäss Beispiel 16 erhaltenen Reaktivfarbstoffmischung werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Farbstoffmischungen, dadurch gekennzeichnet, dass sie einen Reaktivfarbstoff der Formel 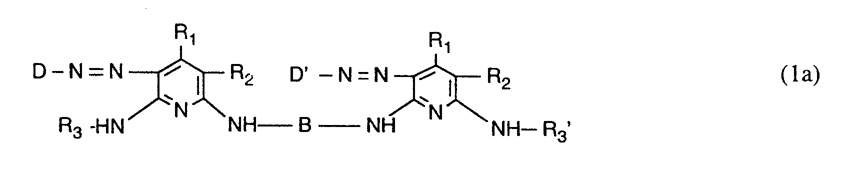 zusammen mit mindestens einem Reaktivfarbstoff der Formeln 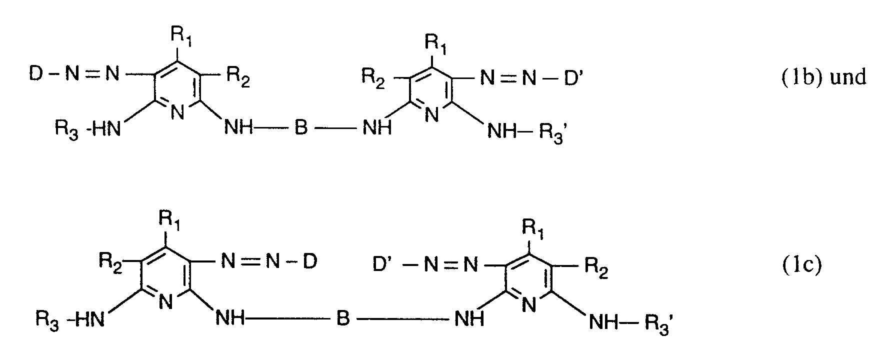
enthalten, wobei D und D' unabhängig voneinander der Rest einer Diazokomponente der Benzol- oder Naphthalinreihe oder der Rest eines Mono- oder Disazofarbstoffes sind,
R₁ C₁-C₄-Alkyl,
R₂ Cyano, Carbamoyl oder Sulfomethyl ist,
R₃ und R₃' unabhängig voneinander Wasserstoff oder gegebenenfalls substituiertes und mit Ausnahme von Methyl gegebenenfalls durch Sauerstoff unterbrochenes C₁-C₁₂-Alkyl bedeuten,
B gegebenenfalls substituiertes und gegebenenfalls durch Sauerstoff unterbrochenes C₂-C₁₂-Alkylen ist
und die Reaktivfarbstoffe der Formeln (1a), (1b) und (1c) jeweils mindestens einen faserreaktiven Rest der Formel
-SO₂-Z (2a), 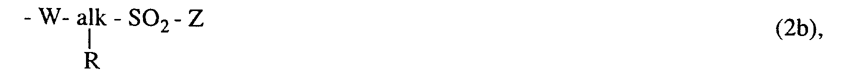
-W-alk-E-alk'-SO₂-Z (2c), 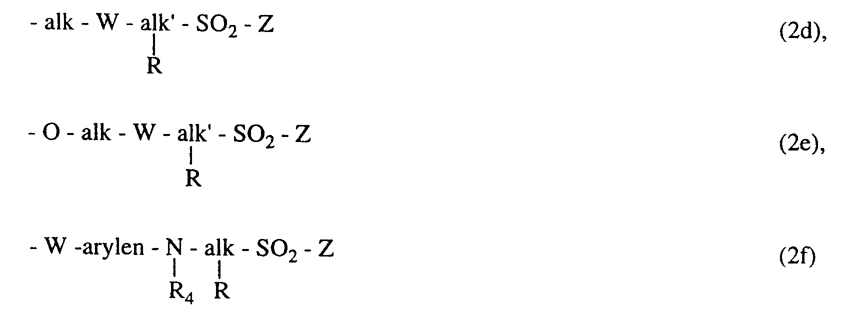
oder
-NH-CO-Z₁ (2g),
worin W eine Gruppe der Formel -SO₂-NR₄-, -CONR₄- oder -NR₄CO- ist, R₄ Wasserstoff, unsubstituiertes oder durch Hydroxy, Sulfo, Sulfato, Carboxy oder Cyano substituiertes C₁-C₄-Alkyl oder ein Rest der Formel 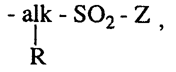 R Wasserstoff, Hydroxy, Sulfo, Sulfato, Carboxy, Cyano, Halogen, C₁-C₄-Alkoxycarbonyl, C₁-C₄-Alkanoyloxy, Carbamoyl oder die Gruppe -SO₂-Z ist, Z eine Gruppe der Formel -CH=CH₂ oder -CH₂-CH₂-U₁ und U₁ eine Abgangsgruppe ist, Z₁ eine Gruppe der Formel 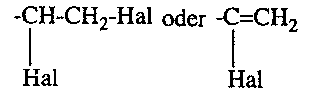 und Hal Halogen bedeutet, E der Rest -O- oder -NR₅- und
R₅ Wasserstoff oder C₁-C₄-Alkyl ist, alk und alk' unabhängig voneinander C₁-C₆-Alkylen bedeuten und arylen einen unsubstituierten oder durch Sulfo, Carboxy, C₁-C₄-Alkyl, C₁-C₄-Alkoxy oder Halogen substituierten Phenylen- oder Naphthylenrest bedeutet, oder einen faserreaktiven Rest der Formel 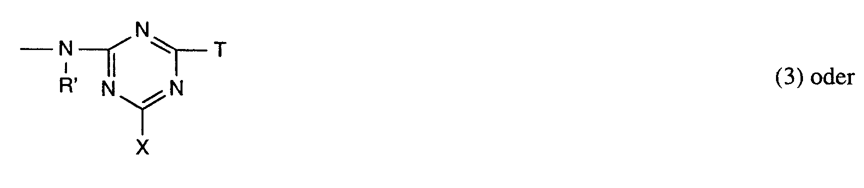 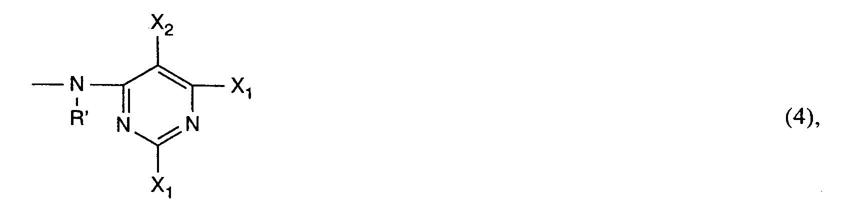
worin R' Wasserstoff oder gegebenenfalls durch Hydroxy, Sulfo, Sulfato, Carboxy oder Cyano substituiertes C₁-C₄-Alkyl ist, X, X₁ und X₂ Halogen bedeuten und T Halogen, Hydroxy, Sulfo, C₁-C₄-Alkoxy, C₁-C₄-Alkylthio, C₁-C₄-Alkylsulfonyl, Phenylsulfonyl, Morpholino oder gegebenenfalls substituiertes Amino ist, oder T ein faserreaktiver Rest der Formel 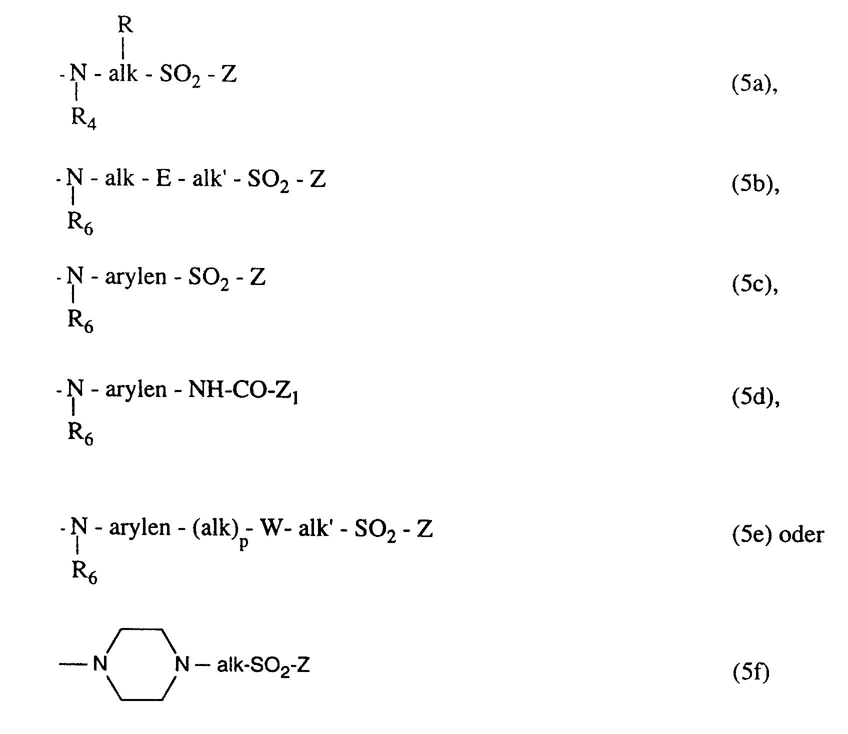
ist, wobei R, R₄, E, W, Z, Z₁, alk, alk' und arylen die oben angegebenen Bedeutungen haben, R₆ Wasserstoff oder C₁-C₄-Alkyl und p 0 oder 1 ist, enthalten, wobei der faserreaktive Rest am Rest D oder D' gebunden ist.

2. Farbstoffmischungen gemäss Anspruch 1, dadurch gekennzeichnet, dass R₁ Methyl ist.

3. Farbstoffmischungen gemäss einem der Ansprüche 1 und 2, dadurch gekennzeichnet, dass R₂ Cyano oder Carbamoyl ist.

4. Farbstoffmischungen gemäss einem der Ansprüche 1 bis 3, dadurch gekennzeichnet, dass R₃ und R₃' unabhängig voneinander Wasserstoff oder gegebenenfalls durch Hydroxyl, Sulfo oder Sulfato substituiertes und mit Ausnahme von Methyl gegebenenfalls durch Sauerstoff unterbrochenes C₁-C₁₂-Alkyl sind.

5. Farbstoffmischungen gemäss einem der Ansprüche 1 bis 4, dadurch gekennzeichnet, dass B C₂-C₆-Alkylen bedeutet.

6. Farbstoffmischungen gemäss einem der Ansprüche 1 bis 5, dadurch gekennzeichnet, dass D und D' unabhängig voneinander ein Rest der Formel 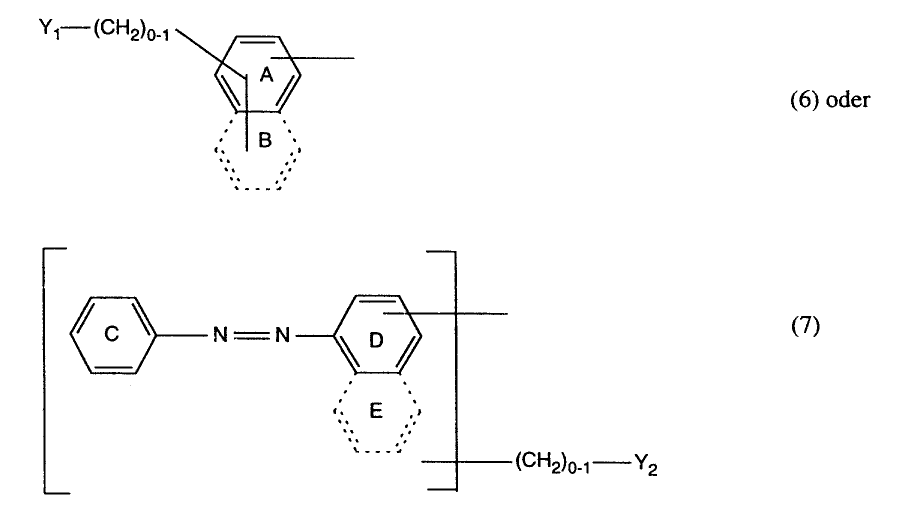 sind, worin die Ringe A, B, C, D und E unabhängig voneinander gegebenenfalls durch C₁-C₄-Alkyl, durch Hydroxy oder C₁-C₄-Alkoxy weitersubstituiertes C₁-C₄-Alkyl, C₁-C₄-Alkoxy, C₂-C₄-Alkanoylamino, Halogen oder Sulfo substituiert sind und Y₁ und Y₂ unabhängig voneinander ein Reaktivrest der Formeln (2a) bis (2g), (3) oder (4) sind.

7. Farbstoffmischungen gemäss einem der Ansprüche 1 bis 6, dadurch gekennzeichnet, dass D und D' identische Bedeutungen haben und R₃ und R₃' identische Bedeutungen haben.

8. Farbstoffmischungen gemäss Anspruch 6, dadurch gekennzeichnet, dass D und D' identische Bedeutungen haben und einen Rest der Formel (6) oder (7) bedeuten, R₁ Methyl, R₂ Cyano oder Carbamoyl ist, R₃ und R₃' identische Bedeutungen haben und Wasserstoff oder gegebenenfalls durch Hydroxyl, Sulfo oder Sulfato substituiertes und mit Ausnahme von Methyl gegebenenfalls durch Sauerstoff unterbrochenes C₁-C₁₂-Alkyl sind und B C₂-C₆-Alkylen bedeutet.

9. Farbstoffmischungen gemäss einem der Ansprüche 1 bis 8, dadurch gekennzeichnet, dass die Farbstoffe der Formeln (1a), (1b) und (1c) jeweils mindestens eine Sulfo- oder Sulfatogruppe, insbesondere mindestens eine Sulfogruppe, enthalten.

10. Verfahren zur Herstellung von Reaktivfarbstoffmischungen gemäss Anspruch 1, dadurch gekennzeichnet, dass man mindestens ein Amin der Formeln
D-NH₂ (8a)
und
D'-NH₂ (8b), (8b),
worin D und D' die in Anspruch 1 angegebenen Bedeutungen haben, diazotiert und auf eine Mischung, welche eine Verbindung der Formel 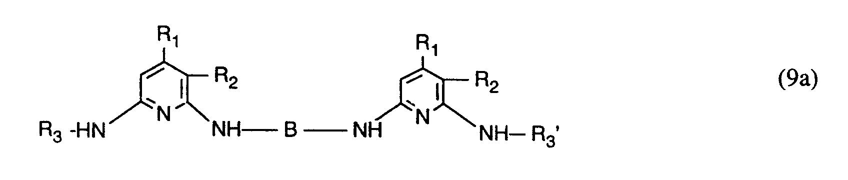 zusammen mit mindestens einer Verbindung der Formeln 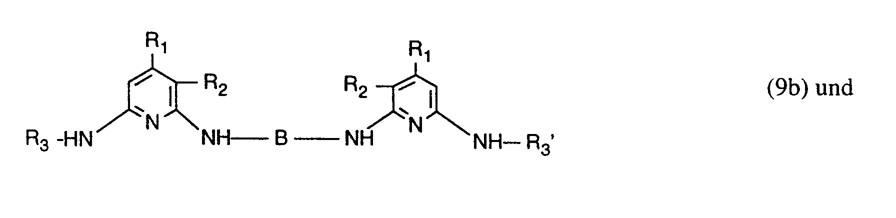 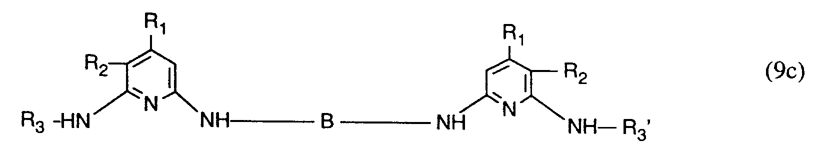 enthält, worin R₁, R₂, R₃, R₃' und B die in Anspruch 1 angegebenen Bedeutungen haben, kuppelt, und gegebenenfalls eine weitere Umwandlungsreaktion anschliesst.

11. Verwendung der Farbstoffmischungen gemäss einem der Ansprüche 1 bis 9 bzw. der gemäss Anspruch 10 hergestellten Farbstoffmischungen zum Färben oder Bedrucken von hydroxylgruppenhaltigen oder stickstoffhaltigen Fasermaterialien.

12. Verwendung gemäss Anspruch 11 zum Färben oder Bedrucken von cellulosehaltigen Fasermaterialien oder natürlichen oder synthetischen Polyamidfasermaterialien.

## Claims

1. A dye mixture which comprises a reactive dye of the formula 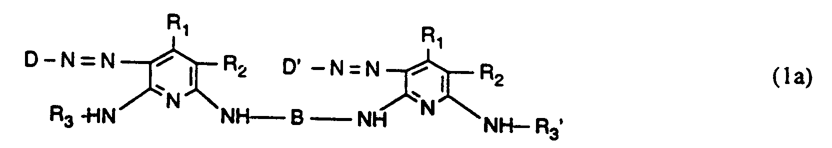 together with at least one reactive dye of the formulae 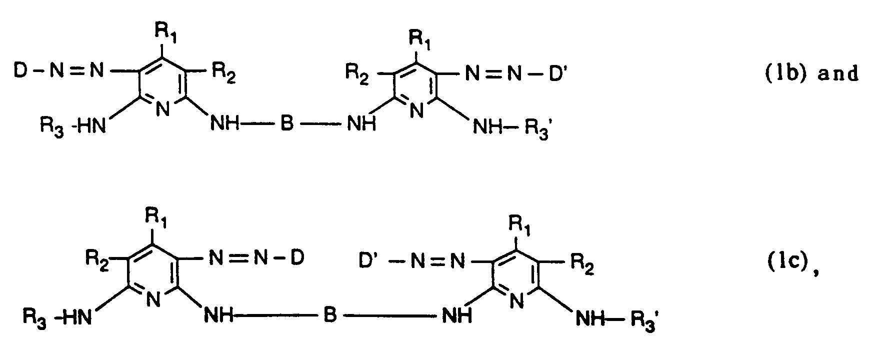
in which D and D' independently of one another are the radical of a diazo component of the benzene or naphthalene series or the radical of a mono- or disazo dye,
R₁ is C₁-C₄alkyl,
R₂ is cyano, carbamoyl or sulfomethyl,
R₃ and R₃' independently of one another are hydrogen or C₁-C₁₂alkyl which is substituted or unsubstituted and, with the exception of methyl, may be interrupted by oxygen, B is C₂-C₁₂alkylene which is substituted or unsubstituted and may be interrupted by oxygen
and the reactive dyes of the formulae (1a), (1b) and (1c) in each case contain at least one fibre-reactive radical of the formula
-SO₂-Z (2a), 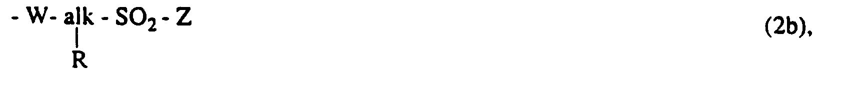
-W-alk-E-alk'-SO₂-Z (2c), 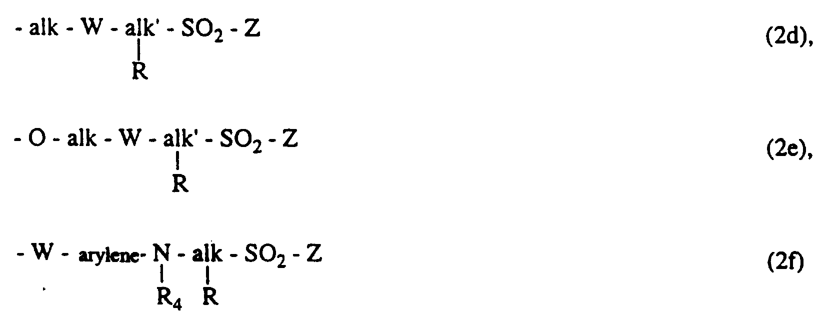
or
-NH-CO-Z₁ (2g),
in which W is a group of the formula -SO₂-NR₄-, -CONR₄- or -NR₄CO-, R₄ is hydrogen, C₁-C₄alkyl which is unsubstituted or substituted by hydroxyl, sulfo, sulfato, carboxyl or cyano, or a radical of the formula 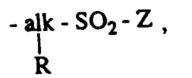
R is hydrogen, hydroxyl, sulfo, sulfato, carboxyl, cyano, halogen, C₁-C₄alkoxycarbonyl, C₁-C₄alkanoyloxy, carbamoyl or the group -SO₂-Z, Z is a group of the formula -CH=CH₂ or -CH₂-CH₂-U₁ and U₁ is a leaving group, Z₁ is a group of the formula 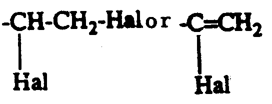 and Hal is halogen, E is the radical -O- or -NR₅- and R₅ is hydrogen or C₁-C₄alkyl, alk and alk' independently of one another are C₁-C₆alkylene and arylene is a phenylene or naphthylene radical which is unsubstituted or substituted by sulfo, carboxyl, C₁-C₄alkyl, C₁-C₄alkoxy or halogen,
or a fibre-reactive radical of the formula 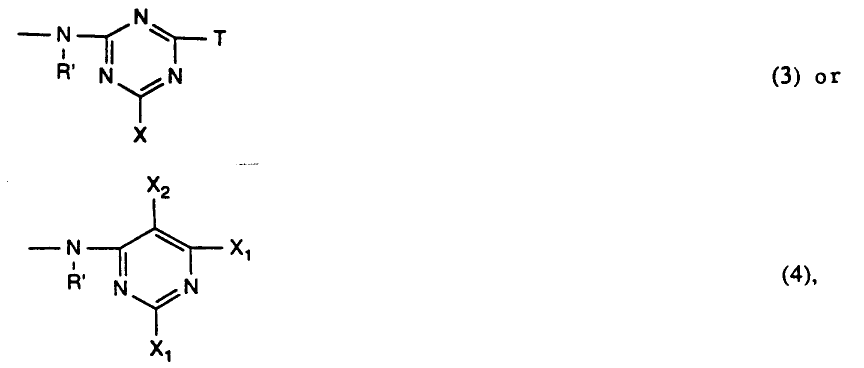
in which R' is hydrogen or C₁-C₄alkyl which is unsubstituted or substituted by hydroxyl, sulfo, sulfato, carboxyl or cyano, X, X₁ and X₂ are halogen and T is halogen, hydroxyl, sulfo, C₁-C₄alkoxy, C₁₋C₄alkylthio, C₁-C₄alkylsulfonyl, phenylsulfonyl, morpholino or substituted or unsubstituted amino, or T is a fibre-reactive radical of the formula 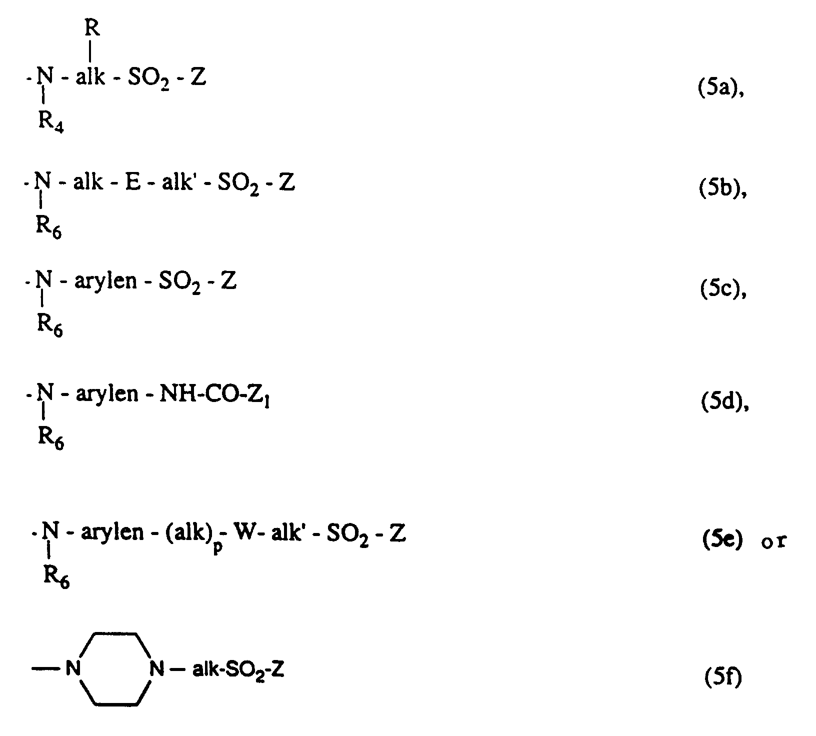
in which R, R₄, E, W, Z, Z₁, alk, alk' and arylene are as defined above, R₆ is hydrogen or C₁-C₄alkyl and p is 0 or 1, the fibre-reactive radical being bonded on the radical D or D'.

2. A dye mixture according to claim 1, in which R₁ is methyl.

3. A dye mixture according to either of claims 1 and 2, in which R₂ is cyano or carbamoyl.

4. A dye mixture according to any one of claims 1 to 3, in which R₃ and R₃' independently of one another are hydrogen or C₁-C₁₂alkyl which is unsubstituted or substituted by hydroxyl, sulfo or sulfato and, with the exception of methyl, may be interrupted by oxygen.

5. A dye mixture according to any one of claims 1 to 4, in which B is C₂-C₆alkylene.

6. A dye mixture according to any one of claims 1 to 5, in which D and D' independently of one another are a radical of the formula 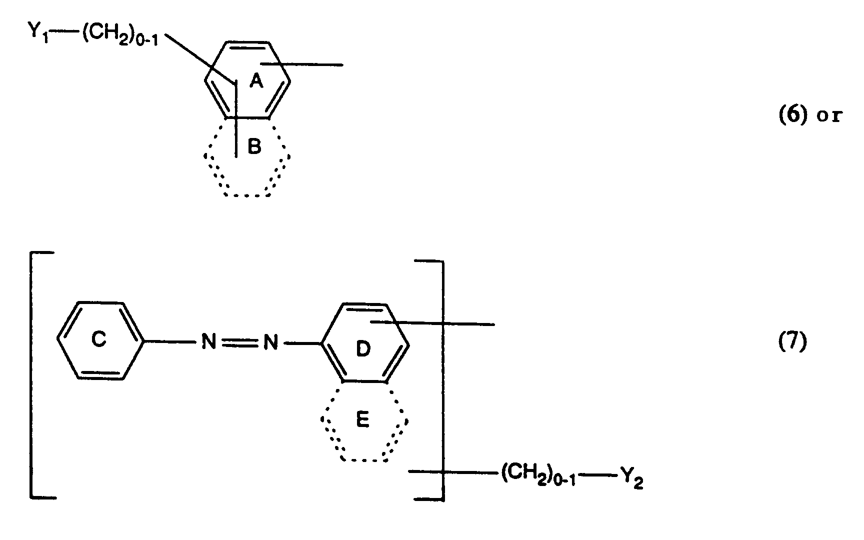 in which the rings A, B, C, D and E independently of one another are unsubstituted or substituted by C₁₋C₄alkyl, C₁-C₄alkyl which is further substituted by hydroxyl or C₁-C₄alkoxy, C₁-C₄alkoxy, C₂-C₄alkanoylamino, halogen or sulfo and Y₁ and Y₂ independently of one another are a reactive radical of the formulae (2a) to (2g), (3) or (4).

7. A dye mixture according to any one of claims 1 to 6, in which D and D' are identical and R₃ and R₃' are identical.

8. A dye mixture according to claim 6, in which D and D' are identical and are a radical of the formula (6) or (7), R₁ is methyl, R₂ is cyano or carbamoyl, R₃ and R₃' are identical and are hydrogen or C₁-C₁₂alkyl which is unsubstituted or substituted by hydroxyl, sulfo or sulfato and, with the exception of methyl, may be interrupted by oxygen and B is C₂-C₆alkylene.

9. A dye mixture according to any one of claims 1 to 8, in which the dyes of the formulae (1a), (1b) and (1c) in each case contain at least one sulfo or sulfato group, in particular at least one sulfo group.

10. A process for the preparation of a reactive dye mixture according to claim 1, which comprises diazotising at least one amine of the formulae
D-NH₂ (8a)
and
D'-NH₂ (8b),
in which D and D' are as defined in claim 1, and coupling the diazotisation product with a mixture which comprises a compound of the formula 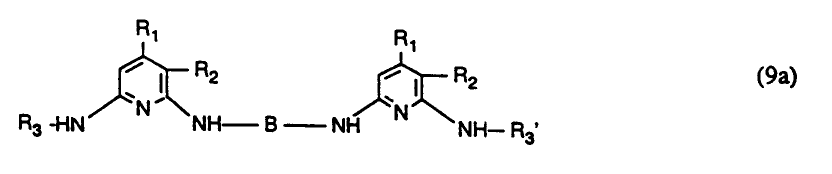 together with at least one compound of the formulae 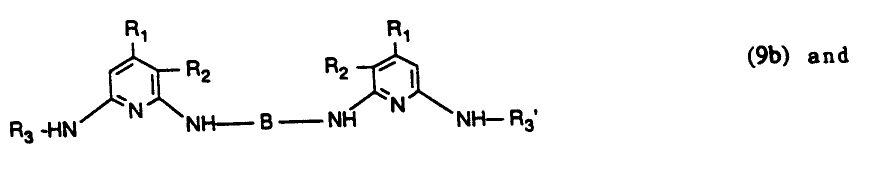 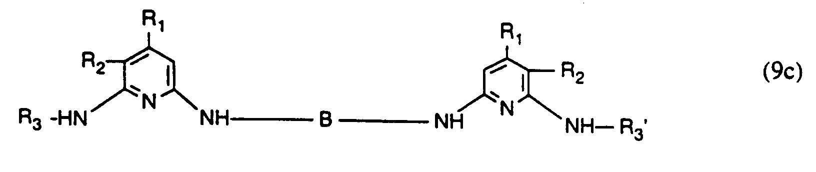 in which R₁, R₂, R₃, R₃' and B are as defined in claim 1, and if appropriate then carrying out a further conversion reaction.

11. The use of a dye mixture according to any one of claims 1 to 9 or of a dye mixture prepared according to claim 10 for dyeing or printing fibre materials containing hydroxyl groups or nitrogen.

12. The use according to claim 11 for dyeing or printing cellulosic fibre materials or naturally occurring or synthetic polyamide fibre materials.

## Revendications

1. Mélange de colorants, caractérisé en ce qu'il contient un colorant réactif de formule 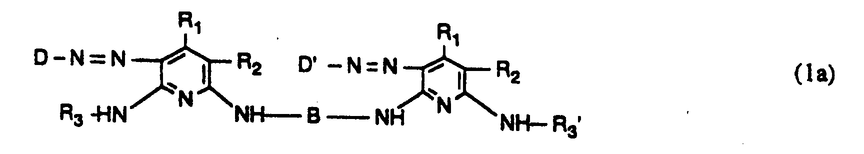 avec en même temps au moins un colorant réactif des formules 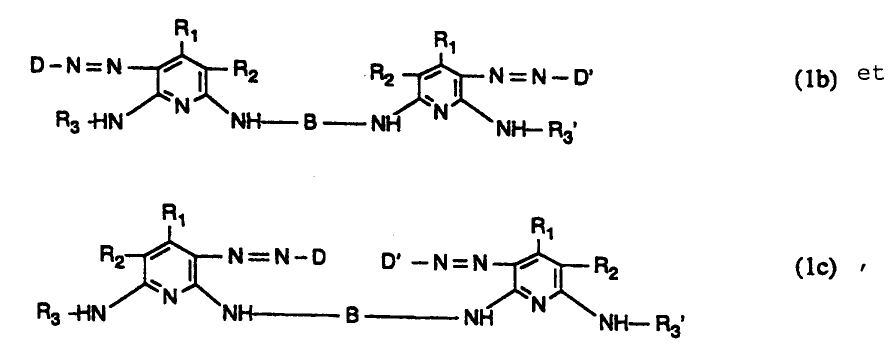
dans lesquelles D et D' représentent indépendamment l'un de l'autre le résidu d'un composant diazoïque de la série du benzène ou du naphtalène ou le résidu d'un colorant mono- ou bisazoïque,
R₁ représente un groupe alkyle en C₁ à C₄,
R₂ représente un groupe cyano, carbamoyle ou sulfométhyle,
R₃ et R₃' représentent indépendamment l'un de l'autre un atome d'hydrogène ou un groupe alkyle en C₁ à C₁₂ éventuellement substitué et à l'exception du méthyle éventuellement interrompu par un atome d'oxygène,
B représente un groupe alkylène en C₂ à C₁₂ éventuellement substitué et éventuellement interrompu par un atome d'oxygène,
et les colorants réactifs des formules (1a), (1b) et (1c) contiennent respectivement au moins un groupe réactif vis à vis des fibres de formule
-SO₂-Z (2a), 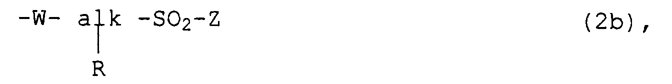
-W-alk-E-alk'-SO₂-Z (2c), 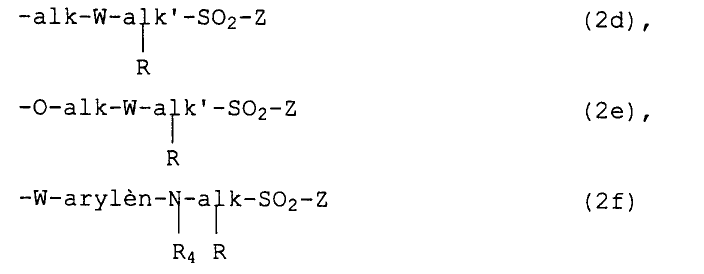
ou
-NH-CO-Z₁ (2g),
dans lesquelles W représente un groupe de formule -SO₂-NR₄-, -CONR₄ ou -NR₄CO-, R₄ représente un atome d'hydrogène, un groupe alkyle en C₁ à C₄ non substitué ou substitué par un groupe hydroxy, sulfo, sulfato, carboxy ou cyano ou un groupe de formule 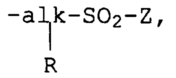 R représente un atome d'hydrogène, un groupe hydroxy, sulfo, sulfato, carboxy, cyano, un atome d'halogène, un groupe alcoxycarbonyle en C₁ à C₄, alcanoyloxy en C₁ à C₄, carbamoyle ou le groupe -SO₂Z, Z étant un groupe de formule -CH=CH₂- ou -CH₂=CH₂- ou -CH₂-CH₂-U₁ et U₁ est un groupe partant, Z₁ représente un groupe de formule 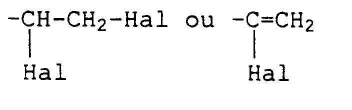 et Hal représente un atome d'halogène, E le groupe -O- ou -NR₅- et
R₅ représente un atome d'hydrogène ou un groupe alkyle en C₁ à C₄, alk et alk' représentent indépendamment l'un de l'autre un groupe alkylène en en C₁ à C₆ et arylène représente un groupe phénylène ou naphtylène non substitué ou substitué par un groupe sulfo, carboxy, alkyle en C₁ à C₄, alcoxy en C₁ à C₄, ou un atome d'halogène, ou un groupe réactif avec les fibres de formule 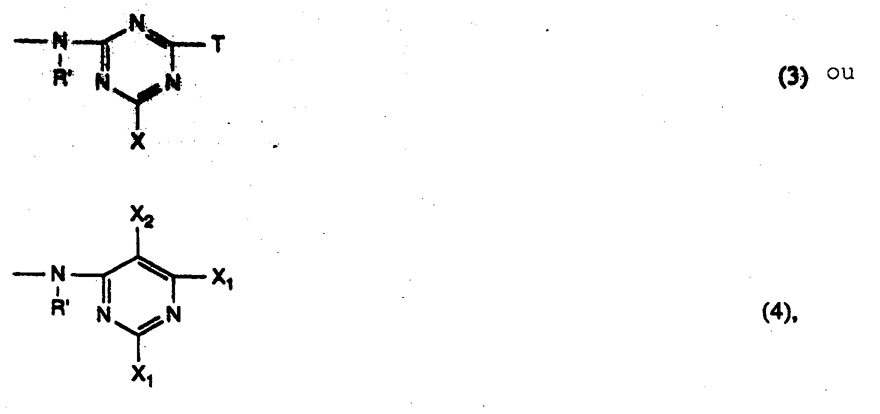
dans lesquelles R' représente un atome d'hydrogène ou un groupe alkyle en C₁ à C₄ éventuellement substitué par un groupe hydroxy, sulfo, sulfato, carboxy ou cyano, X, X₁ et X₂ représentent un atome d'halogène et T représente un atome d'halogène, un groupe hydroxy, sulfo, alcoxy en C₁ à C₄, alkylthio en C₁ à C₄, alkylsulfonyle en C₁ à C₄, phénylsulfonyle, morpholino ou amino éventuellement substitué, ou T représente un groupe réactif avec les fibres de formule 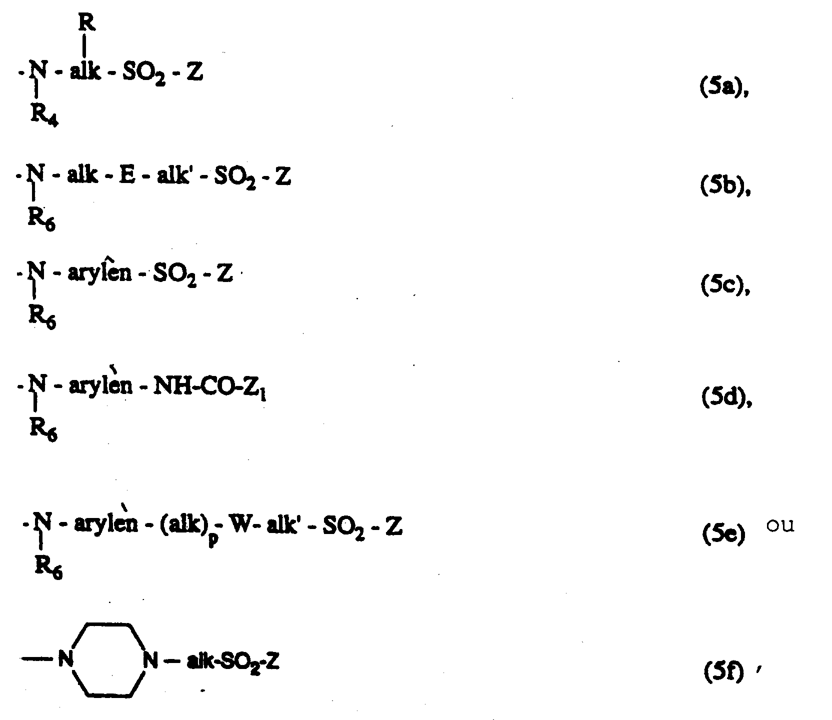
dans lesquelles R, R₄, E, W, Z, Z₁, alk, alk' et arylèn ont les significations indiquées ci-dessus, R₆ est un atome d'hydrogène ou un groupe alkyle en C₁ à C₄ et p est 0 ou 1, le groupe réactif pour les fibres étant lié au groupe D ou D'.

2. Mélange de colorants selon la revendication 1, caractérisé en ce que, R₁ est le groupe méthyle.

3. Mélange de colorants selon l'une des revendications 1 et 2, caractérisé en ce que R₂ est un groupe cyano ou carbamoyle.

4. Mélange de colorants selon l'une des revendications 1 à 3, caractérisé en ce que R₃ et R₃' sont indépendamment l'un de l'autre un atome d'hydrogène ou un groupe alkyle en C₁ à C₁₂ éventuellement substitué par un groupe hydroxyle, sulfo ou sulfato et, à l'exception du méthyle, éventuellement interrompu par un atome d'oxygène.

5. Mélange de colorants selon l'une des revendications 1 à 4, caractérisé en ce que B représente un groupe alkylène en C₂ à C₆.

6. Mélange de colorants selon l'une des revendications 1 à 5, caractérisé en ce que D et D' représentent indépendamment l'un de l'autre un groupe de formule 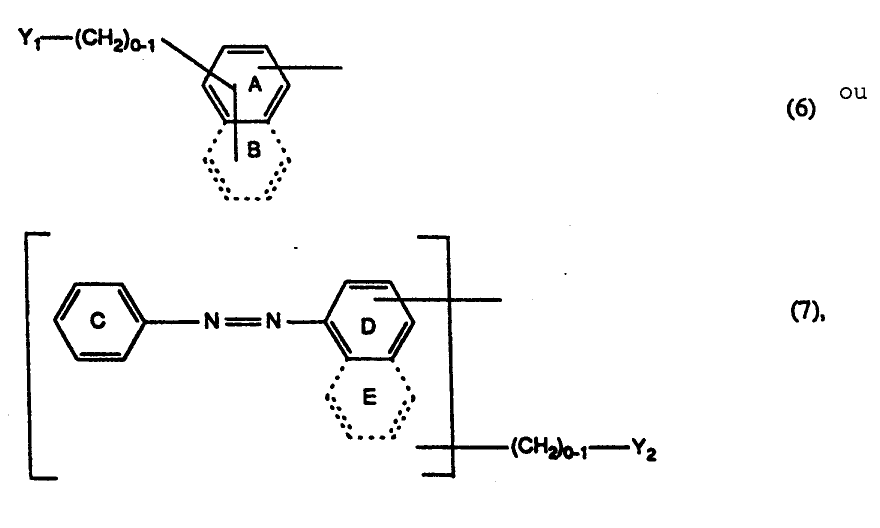 dans lesquelles les cycles A, B, C, D et E sont indépendamment les uns des autres éventuellement substitués par un groupe alkyle en C₁ à C₄, par un groupe alkyle en C₁ à C₄ en plus substitué par un groupe hydroxy ou alcoxy en C₁ à C₄, un groupe alcoxy en C₁ à C₄, alcanoylamino en C₂ à C₄, un atome d'halogène ou un groupe sulfo et Y₁ et Y₂ sont indépendamment l'un de l'autre un groupe réactif des formules (2a) à (2g), (3) ou (4).

7. Mélange de colorants selon l'une des revendications 1 à 6, caractérisé en ce que D et D' ont des significations identiques et R₃ et R₃' ont des significations identiques.

8. Mélange de colorants selon la revendication 6, caractérisé en ce que D et D' ont des significations identiques et représentent un groupe de formule (6) ou (7), R₁ représente un groupe méthyle, R₂ est un groupe cyano ou carbamoyle, R₃ et R₃' ont des significations identiques et sont un atome d'hydrogène ou un groupe alkyle en C₁ à C₁₂ éventuellement substitué par un groupe hydroxyle, sulfo ou sulfato et, à l'exception du méthyle, éventuellement interrompu par un atome d'oxygène et B représente un groupe alkylène en en C₂ à C₆.

9. Mélange de colorants selon l'une des revendications 1 à 8, caractérisé en ce que les colorants des formules (1a), (1b) et (1c) contiennent respectivement au moins un groupe sulfo ou sulfato, en particulier au moins un groupe sulfo.

10. Procédé pour la préparation de mélanges de colorants réactifs selon la revendication 1, caractérisé en ce qu'on réalise la diazotation d'au moins une amine des formules
D-NH₂ (8a)
et
D'-NH₂ (8b), (8b),
dans lesquelles D et D' ont les significations ci-dessus indiquées, et la copulation sur un mélange, qui contient un composé de formule 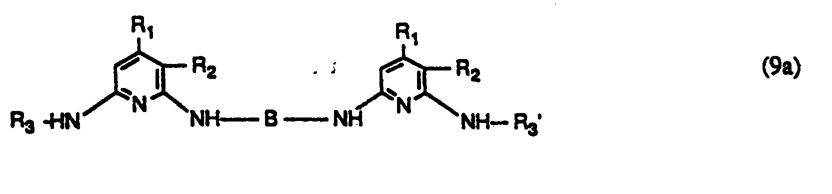 en même temps qu'au moins un composé des formules 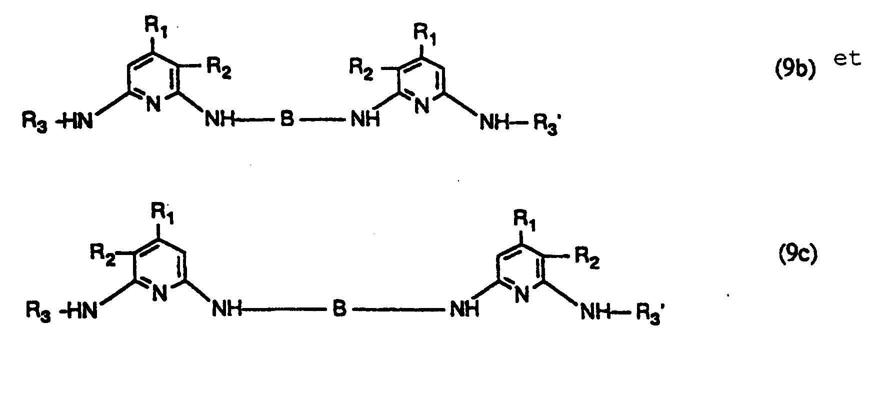 dans lesquelles R₁, R₂, R₃, R₃' et B ont les significations indiquées à la revendication 1 et on ajoute éventuellement une autre réaction de transformation.

11. Utilisation des mélanges de colorants selon l'une des revendications 1 à 9 ou des mélanges de colorants préparés selon la revendication 10 pour la teinture ou l'impression de matériaux fibreux contenant des groupes hydroxyle ou azotés.

12. Utilisation selon la revendication 11 pour la teinture ou l'impression de matériaux fibreux à base de cellulose ou de matériaux de fibres polyamide naturelles ou synthétiques.
